# EUROPÄISCHE PATENTSCHRIFT

(11) **EP 3 759 871 B1**
(45) Veröffentlichungstag und Bekanntmachung des Hinweises auf die Patenterteilung: **02.11.2022**
(21) Anmeldenummer: 19705826.6
(22) Anmeldetag: 01.02.2019
(51) Int. Cl.: H04L 12/403

(54) **MASTER-SLAVE BUSSYSTEM UND VERFAHREN ZUM BETRIEB EINES BUSSYSTEMS**
MASTER-SLAVE BUS SYSTEM AND METHOD FOR OPERATING A BUS SYSTEM
SYSTÈME DE BUS MAÎTRE-ESCLAVE ET PROCÉDÉ DE FONCTIONNEMENT D'UN SYSTÈME DE BUS

(30) Priorität: 28.02.2018 DE 102018001574
(43) Veröffentlichungstag der Anmeldung: 06.01.2021
(73) Patentinhaber: WAGO Verwaltungsgesellschaft mbH, 32423 Minden (DE)
(72) Erfinder: JEROLM, Daniel, 49152 Bad Essen (DE); QUAKERNACK, Frank, 33615 Bielefeld (DE)
(74) Vertreter: Müller, Wolf-Christian
(86) Internationale Anmeldenummer: PCT/IB2019/050814
(87) Internationale Veröffentlichungsnummer: WO 2019/166888

(56) Entgegenhaltungen:
- EP-A1- 2 110 995
- EP-A1- 2 723 010
- EP-A1- 3 035 199
- EP-A1- 3 151 474
- WO-A1-2006/129294
- DE-A1-102007 043 769
- DE-A1-102012 210 243
- DE-B3-102017 000 930
- US-A1- 2008 279 138
- US-A1- 2011 153 889
- US-A1- 2013 210 411
- US-B1- 6 226 680

## Beschreibung

Master/Slave (englisch für Herr/Sklave) ist eine Form der hierarchischen Verwaltung des Zugriffs auf eine gemeinsame Ressource meist in Form eines gemeinsamen Datenkanals in zahlreichen Problemstellungen der Regelung und Steuerung. Für die Datenübertragung steht nur ein gemeinsamer Übertragungskanal zur Verfügung (z.B. als Funkstrecke oder in Form eines Datenbusses). Wenn mehrere Teilnehmer gleichzeitig senden, kann keine Übertragung mehr stattfinden, da dann auf dem Bus bei den empfangenden Teilnehmern nur noch verstümmelte Daten ankommen. Es muss also eine Möglichkeit geschaffen werden, dass sich die Teilnehmer im gegenseitigen Einvernehmen den Datenkanal teilen. Eine Möglichkeit ist es, das Master-Slave-Prinzip anzuwenden. Ein Teilnehmer ist der Master, alle anderen sind die Slaves. Der Master hat als einziger das Recht, unaufgefordert auf die gemeinsame Ressource zuzugreifen. Der Slave kann von sich aus nicht auf die gemeinsame Ressource zugreifen; er muss warten, bis er vom Master gefragt wird (Polling) oder über eine an der gemeinsamen Ressource vorbei gehenden Verbindung dem Master anzeigen, dass er gefragt werden will. Das Master-Slave-Verfahren wird in Bussystemen, wie Feldbussen, z.B. Profibus, BITBUS, AS-I eingesetzt.

Aus der EP 2 466 406 B1 ist ein Verfahren zur automatischen Erzeugung von Dynamic Frame Packgruppen bekannt. Um in Automatisierungssystemen die Übertragungsgeschwindigkeit von Daten von Feldgeräten zu Controllern zu erhöhen, wurde das Konzept des Dynamic Frame Packing (DFP) eingeführt. Eine Datenübertragung erfolgt dabei unter Verwendung von Containerframes. Endgeräte, welche einer Packgruppe zugeordnet sind, übertragen dabei ihre Daten innerhalb dieses besagten Containerframes. Dadurch ergibt sich der Vorteil, dass der Overhead von verwendeten Ethernetframes für eine gegebene Übertragung nur einmalig zum Tragen kommt, da aufgrund des Containerframes lediglich zum Beispiel eine Präambel, ein Startframe Delimiter und ein Header zum Einsatz kommt. Dies ermöglicht, die Packdichte zu erhöhen, sodass innerhalb eines Taktzyklus eine Datenübertragung durch eine Vielzahl von Feldgeräten stattfinden kann, wobei die Aktualisierungsrate bezüglich der Übertragung signifikant erhöht ist im Vergleich zu einer Datenübertragung, welche DFP nicht verwenden würde.

Aus "Industrial Communication with PROFINET", Manfred Popp, Seiten 165-168, aus 2014 ist bekannt, dass für das Dynamic Frame Packing (DFP) der weitest entfernteste Knoten beginnt seine Eingangsdaten (input data) zu senden, indem dieser weitest entfernteste Knoten einen Datenrahmen generiert, der einen Kopf (engl. Header), einen Datenbereich (engl. Data Unit) und einen Tail aufweist. Jedes in der Kommunikation eingebundene Feldgerät (engl. field device) hat intern ein virtuelles Image vom gesamten Datenrahmen gespeichert. Es fügt seine Eingangsdaten in den Datenrahmen ein und aktualisiert Header und Tail bzgl. Länge und Prüfsumme. Hierzu ist ein exaktes Timing erforderlich, so dass jedes Feldgerät weiß, wann es seine Eingangsdaten in den Datenrahmen einfügen muss. Die Länge des Datenrahmens wächst entsprechend mit jeder Hinzufügung von Eingangsdaten durch ein Feldgerät und gelangt zum Schluss zum Controller.

Aus der DE 10 2017 000 930 B3 ist ein Verfahren zur Integration eines weiteren Busteilnehmers in ein Bussystem bekannt. Das Bussystem, aufweisend ein Mastermodul und seriell angeordnete Busteilnehmer, hat die zeitlich aufeinander folgenden Verfahrensschritte: In einem ersten Verfahrensschritt schickt der weitere Busteilnehmer ein Datenpaket an das Mastermodul, um sich bei dem Mastermodul anzumelden, wobei in einem zweiten Verfahrensschritt ein zwischen dem weiteren Busteilnehmer und dem Mastermodul angeordneter Busteilnehmer das Datenpaket stoppt und prüft, ob das Bussystem bereits eine Freigabe erhalten hat. In einem dritten Verfahrensschritt leitet der Busteilnehmer das Datenpaket an das Mastermodul weiter, wenn das Bussystem bislang keine Freigabe erhalten hat.

Die EP 1891778 B1 zeigt eine Elektronische Anordnung, die Folgendes umfasst:
- ein Verbindungsmittel zum Verbinden einer Anzahl Module miteinander, und
- wenigstens eine Netzwerkschnittstelle zur Kopplung wenigstens eines Moduls der vielen Module mit dem Verbindungsmittel und zum Paketieren von Daten von den Modulen zu ersten Paketen. Die Kommunikation über die Verbindung ist auf Zeitschlitzen basiert, wobei ein zweites Paket während eines Zeitschlitzes übertragen wird. Der Datenverkehr über das Verbindungsmittel umfasst wenigstens eine gewährleistete Dienstverkehrsklasse und/oder wenigstens eine bestmögliche Dienstverkehrsklasse. Erste Pakete, die sich auf die wenigstens eine gewährleistete Dienstverkehrsklasse beziehen, werden in zweiten Paketen innerhalb Zeitschlitzen übertragen, die für die gewährleistete Dienstverkehrsklasse reserviert sind. Erste Pakete, die sich auf die wenigstens eine bestmögliche Dienstverkehrsklasse beziehen, werden innerhalb nicht reservierter zweiter Pakete und/oder innerhalb nicht verwendeter Teile der zweiten Pakete übertragen.

Aus der EP 3035199 B1 ist ein Verfahren bekannt, das Folgendes umfasst:
- Identifizieren einer Abfolge von Leseantworten, die über eine Schnittstelle an eine Host-Einrichtung gesendet werden sollen, wobei die Schnittstelle eine transaktionale, gepufferte Speicherschnittstelle umfassen soll und die Abfolge mindestens eine erste Leseantwort auf eine erste Leseanfrage und eine zweite Leseantwort auf eine zweite Leseanfrage umfassen soll;
- Codieren einer Verfolgerkennung der zweiten Leseantwort in der ersten Leseantwort; Senden der ersten Leseantwort mit der Verfolgerkennung der zweiten Leseantwort zu der Host-Einrichtung; und Senden der zweiten Leseantwort an die Host-Einrichtung, nachdem die erste Leseantwort gesendet worden ist.

Der vorliegenden Erfindung liegt die Aufgabe zu Grunde, ein Bussystem anzugeben, dessen Kommunikation in Richtung von Slaves zu einem Master des Bussystems möglichst verbessert ist.

Diese Aufgabe wird durch ein Bussystem mit den Merkmalen des Anspruchs 1 gelöst. Vorteilhafte Weiterbildungen sind Gegenstand von abhängigen Ansprüchen.

Demzufolge ist ein Bussystem mit einem Master, mit einem ersten Slave, mit einem zweiten Slave und mit einem Bus vorgesehen. Durch den Bus sind der Master und der erste Slave und der zweite Slave miteinander verbunden. Der Bus ist bevorzugt als serieller Bus ausgebildet. Der Bus kann auch als Lokalbus bezeichnet werden. Im Bussystem können zusätzlich zum ersten Slave und zum zweiten Slave ein oder mehrere Slaves mit dem Bus verbunden sein.

Der Bus verbindet den Master und den ersten Slave und den zweiten Slave miteinander, um ein Datenpaket vom Master über den ersten Slave und über den zweiten Slave zurück an den Master zu übertragen. Vorzugsweise ist der Übertragungsweg dabei ringförmig ausgebildet. Dabei kann das Datenpaket weitere Slaves im ringförmigen Übertragungsweg durchlaufen.

Der Master ist eingerichtet, das Datenpaket mit einem Kopf und einem Datenbereich zu erzeugen und das erzeugte Datenpaket auf den Bus zu senden. Hingegen sind die Slaves des Bussystems vorzugsweise eingerichtet, das Datenpaket nicht zu erzeugen. Das vom Master erzeugte Datenpaket weist keine Adresse eines der Slaves auf, ist also nicht an ein spezifisches Slave adressiert. Das Datenpaket wird von dem Master als Punkt ausgehend an alle Slaves als Teilnehmer des Bussystems übertragen.

Der erste Slave ist eingerichtet, seine erste Adresse und erste Nutzdaten in ein erstes Segment des Datenbereichs des Datenpakets zu schreiben. Vorzugsweise ist der erste Slave eingerichtet, das erste Segment des Datenbereichs unabhängig vom Master zu bilden. Vorteilhafterweise ist der erste Slave dabei eingerichtet, zumindest eine Länge des ersten Segments festzulegen. Gemäß dieser Weiterbildung ist der Master nicht eingerichtet, das erste Segment zu bilden.

Der zweite Slave ist eingerichtet, seine zweite Adresse und zweite Nutzdaten in ein zweites Segment des Datenbereichs des Datenpakets zu schreiben. Vorzugsweise ist der zweite Slave eingerichtet, das zweite Segment des Datenbereichs unabhängig vom Master zu bilden. Vorteilhafterweise ist der zweite Slave dabei eingerichtet, zumindest eine Länge des zweiten Segments festzulegen. Gemäß dieser Weiterbildung ist der Master nicht eingerichtet, das zweite Segment zu bilden.

Der Master ist eingerichtet, das Datenpaket vom Bus zu empfangen. Dasselbe vom Master generierte Datenpaket gelangt mit den ersten Nutzdaten und zweiten Nutzdaten ergänzt wieder zum Master zurück. Der Master ist dabei eingerichtet, die ersten Nutzdaten basierend auf der ersten Adresse dem ersten Slave zuzuordnen und die zweiten Nutzdaten basierend auf der zweiten Adresse dem zweiten Slave zuzuordnen. Der Master ist eingerichtet, die zugeordneten ersten Nutzdaten und zugeordneten zweiten Nutzdaten weiterzuverarbeiten.

Vorteilhafterweise ist der Master zur Weiterverarbeitung eingerichtet, die ersten Nutzdaten und/oder die zweiten Nutzdaten in zur jeweiligen ersten bzw. zweiten Adresse zugehörige adressierte Speicherbereiche. Vorteilhafterweise ist der Master zur Weiterverarbeitung eingerichtet, die ersten Nutzdaten und/oder die zweiten Nutzdaten basierend auf der ersten bzw. zweiten Adresse in ein oder mehrere Register zu schreiben. Vorteilhafterweise ist der Master hinsichtlich der Weiterverarbeitung zur Auswertung der ersten Nutzdaten und/oder der zweiten Nutzdaten durch eine Software des Masters eingerichtet. Vorteilhafterweise ist der Master hinsichtlich der Weiterverarbeitung zur Weiterleitung der ersten Nutzdaten und/oder der zweiten Nutzdaten über eine vom Bus getrennte Schnittstelle - insbesondere eine Feldbusschnittstelle oder eine Service-Schnittstelle - des Masters eingerichtet.

Gemäß einer vorteilhaften Weiterbildung weist der Datenbereich des Datenpakets während der Übertragung über den Bus eine feste Größe auf. Die Größe des Datenpakets wird also nach der Erzeugung durch den Master durch keines der Slaves verändert. Der Master ist vorteilhafterweise eingerichtet, das Datenpaket mit einem leeren Datenbereich zu erzeugen. Daher werden durch das Datenpaket innerhalb des Datenbereichs keine Daten an einen der Slaves übertragen. Vorteilhafterweise ist der Master eingerichtet, die feste Größe des Datenbereichs festzulegen. Hingegen kann die feste Größe nicht durch den ersten Slave oder den zweiten Slave geändert werden. Die ersten und zweiten Nutzdaten können durch den ersten und zweiten Slave nur in den durch den Master erzeugten Datenbereich des Datenpakets, also nur zwischen Kopf und durch den Master festgelegtem Ende des Datenbereichs geschrieben werden.

Gemäß einer vorteilhaften Weiterbildung ist der Master eingerichtet, die feste Größe des Datenbereichs des Datenpakets basierend auf einer Nachricht zu bestimmen. Vorteilhafterweise ist die Nachricht in einem vorhergehend empfangenen Datenpaket enthalten. Vorteilhafterweise ist der erste Slave und/oder der zweite Slave eingerichtet, die Nachricht zu senden. Vorteilhafterweise ist der erste Slave und/oder der zweite Slave zum Senden der Nachricht eingerichtet, Werte in den Kopf oder den Datenbereich des vorhergehenden Datenpakets zu schreiben.

Gemäß einer vorteilhaften Weiterbildung ist der erste Slave eingerichtet, eine Größe eines unbeschriebenen Abschnitts im Datenbereich des Datenpakets und eine Größe der ersten Nutzdaten zu bestimmen. Vorzugsweise ist der erste Slave eingerichtet, seine erste Adresse und seine ersten Nutzdaten in das erste Segment zu schreiben, wenn die Größe der ersten Nutzdaten die Größe des unbeschriebenen Abschnitts nicht übersteigt. Andernfalls schreibt der erste Slave vorzugsweise keine Nutzdaten in den Datenbereich.

Gemäß einer vorteilhaften Weiterbildung ist der erste Slave eingerichtet, die Nachricht in den Kopf und/oder in den Datenbereich des Datenpakets zu schreiben, wenn die Größe der ersten zu sendenden Nutzdaten die Größe des unbeschriebenen Abschnitts übersteigt. Wie oben beschrieben, wird die Nachricht vom Master empfangen und dient als Basis für die Bestimmung der festen Größe des Datenbereichs im Datenpaket.

Gemäß einer vorteilhaften Weiterbildung ist der zweite Slave eingerichtet, eine Größe eines unbeschriebenen Abschnitts im Datenbereich des Datenpakets und eine Größe der zweiten Nutzdaten zu bestimmen. Die Größe des unbeschriebenen Abschnitts ist dabei beim Empfang durch den zweiten Slave maßgebend. So kann der erste Slave bereits Nutzdaten in das erste Segment geschrieben haben, so dass ein Teil des Datenbereichs bereits beschrieben und der unbeschriebene Abschnitt hierdurch verkleinert wurde. Vorzugsweise ist auch der zweite Slave eingerichtet, seine zweite Adresse und seine zweiten Nutzdaten in das zweite Segment zu schreiben, wenn die Größe der zweiten Nutzdaten die Größe des unbeschriebenen Abschnitts nicht übersteigt.

Gemäß einer vorteilhaften Weiterbildung ist der zweite Slave eingerichtet, die Nachricht in den Kopf oder in den Datenbereich des Datenpakets zu schreiben, wenn die Größe der zweiten Nutzdaten die Größe des unbeschriebenen Abschnitts übersteigt. Mit anderen Worten kann jeder Slave nur dann schreiben, wenn im Datenbereich genügend Platz ist. Zusätzlich können weitere Bedingungen das Schreiben durch den jeweiligen Slave erlauben oder verbieten.

Gemäß einer vorteilhaften Weiterbildung ist der Master eingerichtet, das Datenpaket basierend auf einem bestimmten Ereignis und/oder zyklisch zu erzeugen. Beispielsweise kann das Datenpaket immer zu einem vorbestimmten Zeitpunkt innerhalb eines Zyklusrahmens vom Master gesendet werden. Zusätzlich kann bei hohem Datenverkehr durch den Master das Datenpaket noch zusätzlich öfters gesendet werden.

Gemäß einer vorteilhaften Weiterbildung ist der Master eingerichtet, eine Master-Priorität in das Datenpaket einzufügen. Die Master-Priorität ist dabei durch den Master für ein Datenpaket ermittelt und kann von Datenpaket zu Datenpaket variieren. Die Master-Priorität ist dabei ein Steuerdatum mittels dem nur Nutzdaten von den Slaves zum Master übertragen werden, die entsprechend hoch priorisiert sind. Nutzdaten niedriger Priorität können mittels der Master-Priorität zurückgestellt werden.

Gemäß einer vorteilhaften Weiterbildung ist der erste Slave eingerichtet, die im Datenpaket enthaltene Master-Priorität mit einer ersten Nutzdaten-Priorität der ersten Nutzdaten zu vergleichen. Vorteilhafterweise ist der erste Slave eingerichtet, seine erste Adresse und seine ersten Nutzdaten in das erste Segment zu schreiben, wenn die Master-Priorität nicht höher als die erste Nutzdaten-Priorität ist. Hingegen schreibt der erste Slave seine ersten Nutzdaten nicht in den Datenbereich, wenn die Master-Priorität höher als die erste Nutzdaten-Priorität ist. Somit müsste der erste Slave bei zu hoher Master-Priorität auf ein nachfolgendes Datenpaket warten, das eine Master-Priorität aufweist, die niedrig genug ist.

Gemäß einer vorteilhaften Weiterbildung ist der erste Slave eingerichtet, eine Prioritäts-Nachricht in den Kopf und/oder in den Datenbereich des Datenpakets zu schreiben, wenn die Master-Priorität höher als die erste Nutzdaten-Priorität ist. Vorteilhafterweise ist der Master eingerichtet die Prioritäts-Nachricht zu empfangen und auszuwerten.

Gemäß einer vorteilhaften Weiterbildung ist der zweite Slave eingerichtet, die im Datenpaket enthaltene Master-Priorität mit einer zweiten Nutzdaten-Priorität der zweiten Nutzdaten zu vergleichen. Vorteilhafterweise ist der zweite Slave eingerichtet, seine zweite Adresse und seine zweiten Nutzdaten in das zweite Segment zu schreiben, wenn die Master-Priorität nicht höher als die zweite Nutzdaten-Priorität ist.

Gemäß einer vorteilhaften Weiterbildung ist der zweite Slave eingerichtet, eine Prioritäts-Nachricht in den Kopf und/oder in den Datenbereich des Datenpakets zu schreiben, wenn die Master-Priorität höher als die zweite Nutzdaten-Priorität ist.

Gemäß einer vorteilhaften Weiterbildung ist der Master eingerichtet, die Prioritäts-Nachricht auszuwerten und die Master-Priorität für ein folgendes Datenpaket basierend auf der Auswertung der Prioritäts-Nachricht anzupassen. Beispielsweise könnte die Master-Priorität herabgesetzt werden, wenn die Prioritäts-Nachricht vom Master empfangen wurde und zugleich von den Slaves keine Datenübertragung höher priorer Nutzdaten angefordert ist.

Gemäß einer vorteilhaften Weiterbildung ist der erste Slave und/oder zweite Slave eingerichtet, einen unbeschriebenen Abschnitt im Datenbereich des Datenpakets zu bestimmen. Vorzugsweise basiert die Bestimmung des unbeschriebenen Abschnitts auf
einer Paketlängenangabe im Kopf des Datenpakets, und/oder einem Segment-Kopf innerhalb des Datenbereichs des Datenpakets, und/oder
einem Abzählen bereits beschriebener Abschnitte des Datenbereichs des Datenpakets.

Gemäß einer vorteilhaften Weiterbildung weist der Slave eine Sende-Empfangs-Schaltung auf, die mit dem Bus des Bussystems verbindbar ist. Der Slave weist eine Recheneinheit auf, insbesondere eine State-Machine, die mit der Sende-Empfangs-Schaltung verbunden ist. Der Slave weist einen Speicherbereich auf, der mit der Recheneinheit verbunden ist. Die Sende-Empfangs-Schaltung ist eingerichtet, ein Datenpaket mit einem Kopf und einem Datenbereich zu empfangen, wobei der Datenbereich einen unbeschriebenen Abschnitt aufweisen kann. Die Recheneinheit ist eingerichtet, die Größe des unbeschriebenen Abschnitts zu bestimmen. Die Recheneinheit ist eingerichtet, die Größe des unbeschriebenen Abschnitts im Datenbereich des Datenpakets und eine Größe von im Speicherbereich gespeicherten Nutzdaten zu vergleichen. Die Recheneinheit und die Sende-Empfangs-Schaltung sind eingerichtet, eine Adresse und die gespeicherten Nutzdaten in ein Segment im Datenbereich des Datenpakets zu schreiben, wenn die Größe der gespeicherten Nutzdaten die Größe des unbeschriebenen Abschnitts nicht übersteigt.

Gemäß einer Weiterbildung weist der Master eine Sende-Schaltung auf, die mit dem Bus des Bussystems verbindbar ist. Der Master weist eine Empfangs-Schaltung auf, die mit dem Bus des Bussystems verbindbar ist. Der Master weist eine Recheneinheit, insbesondere eine State-Machine, auf, die mit der Sende-Schaltung und mit der Empfangs-Schaltung verbunden ist. Die Recheneinheit ist eingerichtet, ein Datenpaket mit einem Kopf und einem Datenbereich zu erzeugen. Der Kopf des Datenpakets weist eine Kennung auf, die den Typ des Datenpakets für eine Kommunikationsrichtung für Nutzdaten von mit dem Bus verbundenen Slaves zum Master festlegt. Die Sende-Schaltung ist eingerichtet, das erzeugte Datenpaket auf den Bus zu senden. Die Empfangs-Schaltung ist eingerichtet, das Datenpaket vom Bus zu empfangen. Die Recheneinheit ist eingerichtet, die Nutzdaten basierend auf einer Adresse zumindest einem Slave zuzuordnen und die zugeordneten Nutzdaten weiterzuverarbeiten.

Gemäß einer vorteilhaften Weiterbildung ist der Master eingerichtet, eine Länge des Datenpakets zu bestimmen. Der Kopf des Datenpakets weist vorteilhafterweise eine Längenangabe über die Länge des Datenpakets auf.

Gemäß einer vorteilhaften Weiterbildung ist der Master eingerichtet, eine Mehrzahl von Datenpakten unterschiedlichen Typs auf den Bus zu senden. Vorteilhafterweise werden innerhalb eines Zyklusrahmens, also zyklisch, Prozessdaten übertragen. Prozessdaten sind vorzugsweise Daten, die zu einem vom System gesteuerten Prozess zugehörig sind, beispielsweise Messdaten von Sensoren und/oder Steuerdaten zur Steuerung von Aktoren. Zwischen den zyklisch übertragenen Prozessdaten werden vorzugsweise asynchrone Daten - z.B. Steuer- oder Konfigurier- oder Programmierdaten - als Nutzdaten im Datenpaket übertragen. Vorteilhafterweise wird das Datenpaket in einer Lücke zwischen zyklisch übertragenen Prozessdaten auf den Bus gesendet. Vorzugsweise wird das Datenpaket vom Master als Leerpaket gesendet, insbesondere zum Einsammeln von insbesondere asynchron zu übertragenden Nutzdaten der Slaves. Alternativ kann das Datenpaket auch zur Übertragung von zyklischen oder asynchronen Prozessdaten als Nutzdaten verwendet werden.

Ein weiterer Aspekt der Erfindung ist ein Verfahren zum Betrieb eines Bussystems.

Das Verfahren weist einen Schritt auf: Erzeugen eines Datenpakets mit einem Kopf und einem Datenbereich durch einen Master des Bussystems. Der Datenbereich des gerade erzeugten Datenpakets ist vorzugsweise leer - insbesondere durch Nullwerte gefüllt. Vorteilhafterweise ist der Datenbereich durch Slaves des Bussystems beschreibbar. Vorzugsweise basiert die Erzeugung des Datenpakets auf einem bestimmten Ereignis und/oder erfolgt fortlaufend, insbesondere zyklisch durch den Master.

Das Verfahren weist einen Schritt auf: Senden des Datenpakets vom Master an einen ersten Slave des Bussystems und an einen zweiten Slave des Bussystems. Dabei wird das Datenpaket durch den Master auf den Bus gesendet, der Master und Slaves verbindet.

Das Verfahren weist einen Schritt auf: Schreiben einer ersten Adresse und erster Nutzdaten des ersten Slaves in ein erstes Segment des Datenbereichs des Datenpakets durch das erste Slave.

Das Verfahren weist einen Schritt auf: Schreiben einer zweiten Adresse und zweiter Nutzdaten eines zweiten Slaves in ein zweites Segment des Datenbereichs des Datenpakets durch das zweite Slave.

Das Verfahren weist einen Schritt auf: Empfangen des Datenpakets mit dem geschriebenen ersten Segment und dem geschriebenen zweiten Segment vom Bus durch den Master.

Das Verfahren weist einen Schritt auf: Zuordnen der ersten Nutzdaten zum ersten Slave basierend auf der ersten Adresse durch den Master. Das Verfahren weist einen Schritt auf: Zuordnen der zweiten Nutzdaten zum zweiten Slave basierend auf der zweiten Adresse durch den Master.

Vorteilhafterweise erfolgt das Zuordnen mittels Adressieren eines Speicherbereichs oder Schalten mittels eines Schaltmittels basierend auf der ersten Adresse und der zweiten Adresse. Beispielsweise wird anhand ihrer Position im ersten Segmentkopf die erste Adresse durch den Master erkannt und ausgelesen. Basierend auf der ausgelesenen ersten Adresse werden die Nutzdaten des ersten Slaves vom Master in einen zugehörigen Speicherbereich durch Adressierung des Speicherbereichs geschrieben.

Beispielweise werden die zweiten Nutzdaten des zweiten Slaves mittels eines Multiplexers in ein Register geschrieben, dabei wird mittels einer Zuordnungstabelle (LUT) das Schalten des Multiplexers basierend auf der zweiten Adresse des zweiten Slaves gesteuert und so die Zuordnung hergestellt.

Das Verfahren weist einen Schritt auf: Weiterverarbeiten der zugeordneten ersten Nutzdaten und zugeordneten zweiten Nutzdaten durch den Master.

Die Verfahrensschritte können grundsätzlich in veränderter Reihenfolge durchgeführt werden, sofern sich durch Abhängigkeiten keine Reihenfolge ergibt. Grundsätzlich müssen die Verfahrensschritte nicht unmittelbar aufeinander folgen. Es ist ebenfalls möglich, dass zwischen den Verfahrensschritten weitere Schritte zeitlich eingefügt werden. Ebenfalls kann hierdurch eine neue Reihenfolge festgelegt werden.

Gemäß einer vorteilhaften Weiterbildung wird zeitlich vor dem Datenpaket ein vorhergehendes Datenpaket übertragen. Vorteilhafterweise wird zeitlich nach dem Datenpaket ein nachfolgendes Datenpaket übertragen. Vorzugsweise wird durch den Master eine Größe des Datenbereichs des Datenpakets festgelegt basierend auf einer Nachricht, die im vorhergehenden Datenpaket enthalten ist. Vorteilhafterweise wird die Nachricht von dem ersten Slave und/oder dem zweiten Slave in das vorhergehende Datenpaket geschrieben.

Das Datenpaket wird im Sinne eines Broadcast oder Multicast jedoch nacheinander an alle Slaves des Bussystems gesendet. Eine Vervielfachung des Datenpakets ist daher nicht erforderlich. Das gerade vom Master gesendete Datenpaket enthält keine Adressen, ist also nicht an ein bestimmtes Slave adressiert. Das gerade vom Master gesendete Datenpaket enthält jedoch auch keine Nutzdaten, die vom Master an die Slaves gesendet werden sollen. Entsprechend ist das Datenpaket leer. Das Datenpaket ist in dem Sinne eine Aufforderung an die Slaves ihre zunächst an den Master gerichteten Nutzdaten in das Datenpaket zu schreiben. Aufgrund der limitierten Größe des Datenpakets kann es sein, dass nicht alle Slaves ihre Nutzdaten in das Datenpaket schreiben können. Um dennoch dem Master mitzuteilen, dass weitere Nutzdaten von zumindest einem Slave an den Master gesendet werden sollen, wird von dem jeweiligen Slave die Nachricht - beispielweise in Form eines Codes - eingefügt. Basierend auf der Nachricht werden durch den Master weitere Datenpakete zur Abholung von Nutzdaten der Slaves erzeugt.

Die Erfindung ist nicht auf die zuvor erläuterten Merkmale der Weiterbildungen beschränkt. Beispielweise können die Merkmale der Weiterbildungen auch untereinander kombiniert werden. Vorteilhafte Ausführungsbeispiele der Erfindungen sind zu den Figuren erläutert.

Dabei zeigen
- Figur 1: eine schematische Darstellung eines Ausführungsbeispiels eines Bussystems,
- Figuren 2, 2a, 2b: schematische Darstellungen eines Ausführungsbeispiels eines Daten pakets,
- Figur 3: eine schematische Darstellung eines Ausführungsbeispiels eines Slaves eines Bussystems,
- Figur 4: eine schematische Darstellung eines Ausführungsbeispiels eines Masters eines Bussystems, und
- Figuren 5a, 5b, 5c: schematische Ablaufdiagramme von Ausführungsbeispielen von Verfahrensschritten.

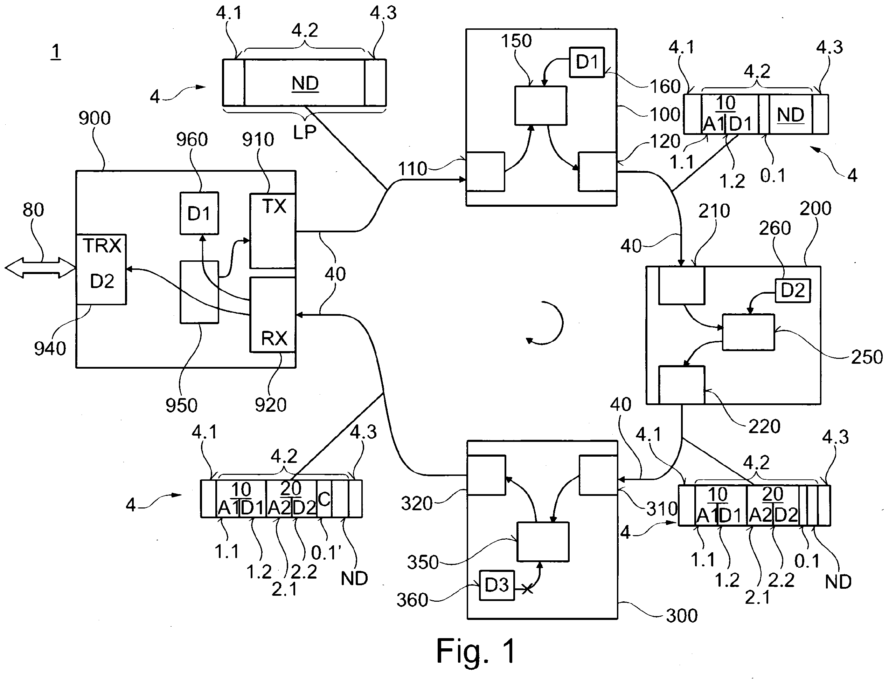

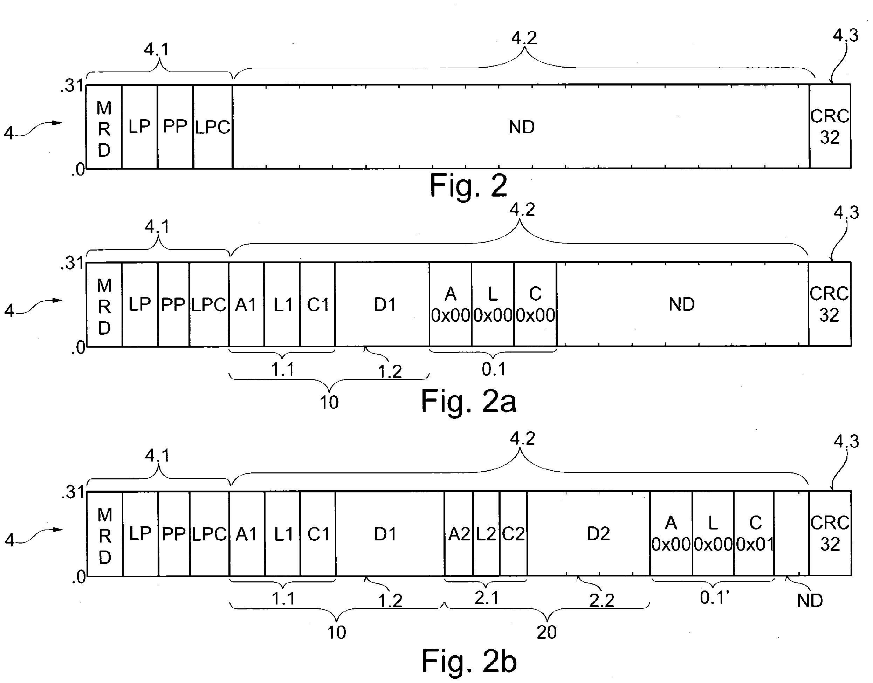

Das in den Figuren 1 und 2 dargestellte Datenpaket 4 erlaubt dem Master 900 Nutzdaten D1, D2, D3 von jedem Slave 100, 200, 300 zu lesen. Dabei hält beispielweise ein erster Slave 100 erste Nutzdaten D1 bestimmter Priorität zur Übertragung bereit. Das Datenpaket 4 ist ausgebildet, Nutzdaten D1, D2, D3 von mehreren Slaves 100, 200, 300 zu transportieren. Die Anzahl der Slaves 100, 200, 300 die ein und dasselbe Datenpaket 4 zur Nutzdatenübertragung teilen können, ist durch die Größe eines Datenbereichs 4.2 des Datenpakets 4 begrenzt.

Im Ausführungsbespiel der Figuren 2, 2a und 2b ist ein Datenpaket 4 mit einem Kopf 4.1 einem Datenbereich 4.2 und einem Tail 4.3 schematisch dargestellt. Die drei Darstellungen der Figuren 2, 2a und 2b zeigen das gleiche Datenpaket 4 zu unterschiedlichen Zeitpunkten, wobei der Datenbereich 4.2 durch Slaves 100, 200 geändert wird. Dabei ist in Figur 2 das Datenpaket 4 im Ausgangszustand dargestellt.

In der Figur 2b ist dargestellt, dass im Datenbereich 4.2 des Datenpakets 4 Segmente 10, 20 gebildet sind. Innerhalb des Datenbereichs 4.2 hat jedes Segment 10, 20 für Nutzdaten D1, D2 seinen eigenen Segment-Kopf 1.1, 2.1 und seinen eigenen Nutzdatenbereich 1.2, 2.2 für die Nutzdaten D1, D2. Gibt es ausreichend Raum für einen Segment-Kopf 0.1' nach dem letzten Nutzdatenbereich 2.2, so fügt der zuletzt in den Datenbereich 4.2 schreibende Slave 200 einen Schluss-Segment-Kopf an, so dass ein unbeschriebener Abschnitt ND des Datenbereichs 4.2 seinen eigenen Segment-Kopf hat.

Der letzt schreibende Slave 200 füllt den Schluss-Segment-Kopf mit Nullwerten 0x00 an. In Figur 2b ist das Datenpaket 4 dargestellt, nachdem es einen weiteren Slave 300 durchlaufen hat. Die Felder des vom vorhergehenden Slave 200 geschriebenen Segment-Kopfes 0.1' haben alle den Wert 0x00 mit Ausnahme des Zählerwerts C, wobei ein Zählerwert C gespeichert wird, der durch das weitere Slave 300 änderbar, beispielweise inkrementierbar ist, wenn der unbeschriebene Abschnitt ND für Nutzdaten D3 dieses Slaves 300 nicht ausreichend groß ist. Dieser Fall ist in Figur 2b dargestellt.

Jeder Slave 100, 200, 300 im Bussystem 1 weist eine Recheneinheit 150, 250, 350 auf, die eingerichtet ist, das Datenpaket 4 zu verarbeiten. Entsprechend wird das Datenpaket 4 durch eine Recheneinheit 150, 250, 350 des Slaves 100, 200, 300 verarbeitet, der Nutzdaten D1, D2, D3 bereit zur Übertragung an den Master 900 hat. Zusätzlich können die Nutzdaten priorisiert sein (im Ausführungsbeispiel der Figur 1 nicht dargestellt).

Figur 1 zeigt ein beispielhaftes Szenario eines Bussystems 1 mit einem Master 900 und einem ersten Slave 100 und einem zweiten Slave 200 und einem dritten Slave 300 und einem Bus 40, der den Master 900 und die Slaves 100, 200, 300 miteinander verbindet. Das Bussystem 1 im Ausführungsbeispiel der Figur 1 ist vereinfacht dargestellt. Existierende Bussysteme haben oft eine deutlich größere Anzahl von Slaves, die in die Kommunikation mit dem Master 900 eingebunden sind.

Der Master 900 weist im Ausführungsbeispiel der Figur 1 eine erste Schnittstelle mit einer Sende-Schaltung 910 und einer Empfangs-Schaltung 920 zur Verbindung mit dem Bus 40 auf. Zusätzlich weist der Master 900 eine zweite Schnittstelle zur Verbindung mit einem Feldbus 80, beispielweise einem ProfiNET oder EtherCAT oder ein Time-Sensitive Network (TSN) gemäß IEEE 802.1 auf. Entsprechend ist der Bus 40 ein untergeordneter Bus und der Feldbus 80 ist ein übergeordneter Bus. Der Bus 40 kann auch als Lokalbus bezeichnet werden. Häufig sind die Slaves 100, 200, 300 in der Nähe des Masters 900 angeordnet, vorteilhafterweise mechanisch am Gehäuse des Masters 900 befestigt. Der Master 900 ist im Ausführungsbeispiel der Figur 1 eingerichtet, Daten über den Feldbus 80 empfangener Datentelegramme in Datenpakete des Lokalbusses 40 umzusetzen und umgekehrt. Entsprechend kann der Master 900 auch als Koppler bezeichnet werden.

Der an der ersten Schnittstelle des Masters 900 angeschlossene Bus 40 ist zur Übertragung des Datenpakets 4 eingerichtet. Der Master 900 ist eingerichtet, das Datenpaket 4 zu erzeugen. Insbesondere ist eine Recheneinheit 950 des Masters 900 eingerichtet, ein Datenpaket 4 mit einem Kopf 4.1 und einem Datenbereich 4.2 zu erzeugen. Das Datenpaket 4 wird nach der Erzeugung vom Master 900 auf den Bus 40 gesendet. Das vom Master 900 gesendete Datenpaket 4 ist in Figur 1 schematisch dargestellt. Es weist einen Kopf 4.1 einen Datenbereich 4.2 und einen Tail 4.3 auf. Der Datenbereich 4.2 ist unmittelbar nach dem Senden durch den Master 900 ausschließlich mit einem unbeschriebenen Abschnitt ND belegt. Das Datenpaket 4 wird entsprechend durch Master 900 leer gesendet, weist also keine Nutzdaten auf. Entsprechend kann das Datenpaket 4 unmittelbar nach dem Senden durch den Master 900 auch als Leerdatenpaket 4 bezeichnet werden. Das Leerdatenpaket 4 hat dabei die Länge LH. Der Master 900 schreibt keine Adresse eines Slaves 100, 200, 300 in das Datenpaket 4. Das Datenpaket 4 ist entsprechend an alle Slaves 100, 200, 300 des Systems 1 gerichtet.

Das Datenpaket 4 wird durch alle Slaves 100, 200, 300 und dann zurück zum Master 900 übertragen. Entsprechend ist im Ausführungsbeispiel der Figur 1 der Übertragungsweg für das Datenpaket 4 durch den Bus 40 ringförmig ausgebildet. Dabei ist es im Ausführungsbeispiel der Figur 1 nicht erforderlich, dass das Datenpaket 4 zunächst durch den ersten Slave 100 vollständig empfangen werden muss, bevor es an den zweiten Slave 200 weiterübertragen wird. Vielmehr kann das Datenpaket 4 abschnittsweise, beispielweise symbolweise, von einem zum nächsten Teilnehmer 900, 100, 200, 300 übertragen werden. Beispielsweise sendet der erste Slave 100 das zuvor bereits empfangene erste Symbol des Datenpakets 4 an den zweiten Slave 200, während zeitgleich der erste Slave 100 das zweite Symbol vom Master 900 empfängt. Hierdurch werden Latenzen signifikant reduziert. Ein Symbol weist vorzugsweise eine feste Anzahl von Bits, beispielweise 4, 8, 16 oder 32 Bit auf. Im Ausführungsbeispiel der Figuren 2, 2a und 2b ist ein Datenpaket 4 mit Symbolen mit einer Bitbreite von beispielhaften 32 Bits schematisch dargestellt.

Das Datenpaket 4 gelangt im Ausführungsbeispiel der Figur 1 vom Master 900 über den Bus 40 und eine Anzahl Slaves 100, 200, 300 zurück zum Master 900. Dabei gelangt das Datenpaket 4 vom Master 900 zunächst zum ersten Slave 100 über die erste Slave-Eingangs-Schnittstelle 110. Von der ersten Slave-Ausgangs-Schnittstelle 120 des ersten Slaves 100 gelangt das Datenpaket 4 über den Bus 40 und die zweite Slave-Eingangs-Schnittstelle 210 zum zweiten Slave 200. Von der zweiten Slave-Ausgangs-Schnittstelle 220 des zweiten Slaves 200 gelangt das Datenpaket 4 über den Bus 40 und die dritte Slave-Eingangs-Schnittstelle 310 zum dritten Slave 300. Von der dritten Slave-Ausgangs-Schnittstelle 320 des dritten Slaves 300 gelangt das Datenpaket 4 über den Bus 40 und die Eingangs-Schnittstelle 920 zurück zum Master 900. Entsprechend wird das Datenpaket 4 von keinem der Slaves 100, 200, 300 neu erzeugt. Die Slaves 100, 200, 300 können die Länge LH des Datenpakets 4 nicht ändern. Somit ist die Übertragung von Nutzdaten D1, D2, D3 in der Richtung von den Slaves 100, 200, 300 zu dem Master 900 durch die Länge LH des Datenpakets 4 limitiert. Um dennoch eine dynamische Anpassung der Übertragungsbandbreite zu ermöglichen, ist der Master 900 vorteilhafterweise eingerichtet, die Länge LH und/oder die Anzahl von Datenpaketen 4 innerhalb eines Zyklus zu ändern. Die Änderung der Länge LP und/oder der Anzahl von Datenpaketen 4 erfolgt durch den Master 900 dabei vorzugsweise basierend auf Informationen, die der Master 900 insbesondere von den Slaves 100, 200, 300 erhält.

Im Ausführungsbeispiel der Figur 1 hat der erste Slave 100 erste Nutzdaten D1 in einem Speicherbereich 160 gespeichert. Mittels der Recheneinheit 150 fügt der erste Slave 100 die ersten Nutzdaten D1 in ein erstes Segment 10 in den Datenbereich 4.2 des Datenpakets 4 ein. Entsprechend ist das vom ersten Slave 100 gesendete Datenpaket 4 schematisch in Figur 1 gezeigt. Das erste Segment 10 weist einen ersten Segment-Kopf 1.1 und einen ersten Segment-Datenbereich 1.2 mit den ersten Nutzdaten D1 auf. In den ersten Segment-Kopf 1.1 hat der erste Slave 100 seine erste Adresse A1 geschrieben. Der erste Slave 100 hat an die Nutzdaten D1 im ersten Segment 10 einen leeren Segment-Kopf 0.1 mit ausschließlich den Werten 0x00 angehängt, dem ein unbeschriebener Abschnitt ND innerhalb des Datenbereichs 4.2 und der Tail 4.3 des Datenpakets 4 folgt.

Im Ausführungsbeispiel der Figur 1 hat der zweite Slave 200 zweite Nutzdaten D2 in einem Speicherbereich 260 gespeichert. Mittels der Recheneinheit 250 fügt der zweite Slave 200 die zweiten Nutzdaten D2 in ein zweites Segment 20 in den Datenbereich 4.2 des Datenpakets 4 ein. Entsprechend ist das vom zweiten Slave 200 gesendete Datenpaket 4 schematisch in Figur 1 gezeigt. Das zweite Segment 20 folgt dabei unmittelbar dem ersten Segment 10 und weist einen zweiten Segment-Kopf 2.1 und einen zweiten Segment-Datenbereich 2.2 mit den zweiten Nutzdaten D2 auf. Der zweite Segment-Kopf 2.1 ersetzt dabei den bisherigen leeren Segment-Kopf vor dem Empfang des Datenpakets 4 durch den zweiten Slave 200. In den zweiten Segment-Kopf 2.1 hat der zweite Slave 200 seine zweite Adresse A2 geschrieben. Der zweite Slave 200 hat an die zweiten Nutzdaten D2 im zweiten Segment 20 erneut einen leeren Segment-Kopf 0.1 mit ausschließlich den Werten 0x00 angehängt, dem ein verbleibender unbeschriebener Abschnitt ND innerhalb des Datenbereichs 4.2 und der Tail 4.3 des Datenpakets 4 folgt.

Im Ausführungsbeispiel der Figur 1 ist der verbleibende unbeschriebene Abschnitt ND im Datenbereich 4.2 vor einem Empfang des Datenpakets 4 durch den dritten Slave 300 jedoch so klein, dass die dritten Nutzdaten D3 des dritten Slaves 300 nicht in den verbleibenden unbeschriebenen Abschnitt ND passen. Entsprechend kann die Recheneinheit 350 des dritten Slaves 300 die dritten Nutzdaten D3 nicht aus dem Speicherbereich 360 holen und in das Datenpaket 4 schreiben (schematisch in Figur 1 durch ein X dargestellt). Im Ausführungsbeispiel der Figur 1 fügt der dritte Slave 300 in das Datenpaket 4 eine Nachricht C in den leeren Segment-Kopf 0.1 ein. Beispielweise ist ein Wert der Nachricht als Zählerwert C definiert, der durch den dritten Slave 300 verändert, insbesondere inkrementiert oder dekrementiert wird. Alternativ kann die Nachricht C auch durch das Setzen eines Bits oder dergleichen erzeugt werden. Die Nachricht C ist im Datenpaket 4 gezeigt, welches an der Empfangs-Schaltung 920 des Masters 900 in Figur 1 schematisch dargestellt ist. Entsprechend ist ein geänderter Segment-Kopf 0.1' vor dem unbeschriebenen Abschnitt ND gezeigt.

Der Master 900 weist im Ausführungsbeispiel der Figur 1 eine Recheneinheit 950 auf, die mit der Sende-Schaltung 910 und mit der Empfangs-Schaltung 920 verbunden ist. Die Rechenschaltung 950 weist beispielsweise eine State-Machine auf. Das Datenpaket 4 wird im Ausführungsbeispiel der Figur 1 von der Empfangs-Schaltung 920 des Masters 900 empfangen. Dabei ist die Recheneinheit 950 eingerichtet, die ersten Nutzdaten D1 mit der ersten Adresse A1 dem ersten Slave 100 zuzuordnen. Die Zuordnung kann im einfachsten Fall durch Vergleich der im ersten Segment 10 empfangenen ersten Adresse mit einem vorgegebenen Adresswert erfolgen. Stimmen diese überein, werden die ersten Nutzdaten D1 in einen Speicherbereich 960 beispielsweise an eine vorgegebene Speicheradresse oder in ein vorgegebenes Register geschrieben und z.B. innerhalb einer Software ausgelesen, weiterberechnet usw. Im Ausführungsbeispiel der Figur 1 werden die zweiten Nutzdaten D2 aus dem zweiten Segment 20 basierend auf der zweiten Adresse A2 dem zweiten Slave 200 zugeordnet. Im Ausführungsbeispiel der Figur 2 sind die zweiten Nutzdaten D2 beispielhaft zur Weiterleitung über den Feldbus 80 vorgesehen, so dass die Weiterverarbeitung darin besteht, die zweiten Nutzdaten D2 in den Transceiver 940 zum Feldbus 80 zu schreiben.

Im Ausführungsbeispiel der Figur 1 können als erste Nutzdaten D1, zweite Nutzdaten D2 und dritte Nutzdaten D3 beispielweise als Prozessdaten für einen Prozess insbesondere für einen Fertigungsprozess übertragen werden. Diese sind beispielweise Sensor- und/oder Aktordaten. Alternativ können im Ausführungsbeispiel der Figur 1 als erste Nutzdaten D1, zweite Nutzdaten D2 und dritte Nutzdaten D3 Systemdaten, insbesondere zur Konfiguration, Parametrierung, Programmierung und/oder Initialisierung übertragen werden. Systemdaten dienen dabei dazu, einzelne Teilnehmer 100, 200, 300 des Systems 1 einzustellen oder Informationen, wie beispielweise den Status oder Parameter auszulesen.

Im Ausführungsbeispiel der Figur 1 werden die Prozessdaten zyklisch, beispielweise zu einem oder mehreren vorbestimmten Zeitpunkten innerhalb eines Zyklusrahmens, übertragen. Die Systemdaten werden disjunkt zu den Prozessdaten übertragen. Die Systemdaten werden dabei asynchron übertragen. Im Ausführungsbeispiel der Figur 1 ist der Master 900 vorteilhafterweise eingerichtet, das Datenpaket 4 disjunkt, also in einer Übertragungslücke der Prozessdaten zu übertragen. Der Master 900 ist dabei eingerichtet, vor dem Senden des Datenpakets 4 eine feste Größe des Datenbereichs 4.2 zu bestimmen. Die Bestimmung der festen Größe des Datenbereichs 4.2 basiert im Ausführungsbeispiel der Figur 1 zum einen auf einer Größe einer Übertragungslücke zwischen zwei Prozessdatenübertragungen. Zudem basiert die Bestimmung der festen Größe des Datenbereichs 4.2 auf der Nachricht C eines vorhergehenden Datenpakets 4', wobei die Nachricht von einem oder mehreren der Slaves 100, 200, 300 des Systems 1 stammt.

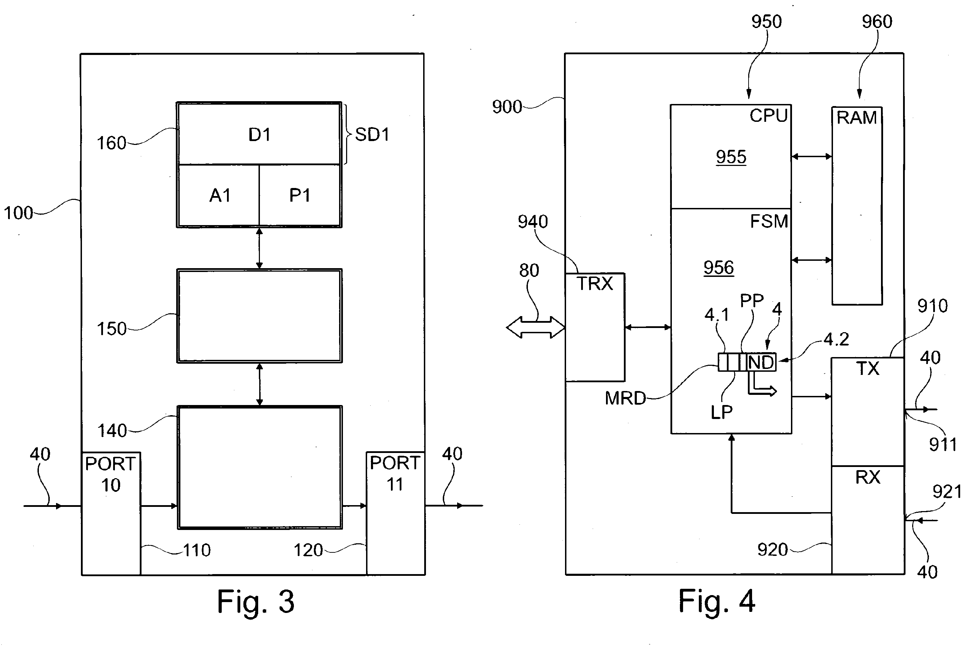

Im Ausführungsbeispiel der Figuren 2, 2a und 2b ist ein anderes Datenpaket 4 mit einem detaillierten Aufbau schematisch dargestellt. Abweichend vom Ausführungsbeispiel der Figur 1 weist das dargestellte Datenpaket 4 eine Vielzahl dargestellter Datenfelder auf. Im Ausführungsbeispiel der Figuren 2, 2a, 2b weist jedes Datenfeld eine Bitbreite von 32 Bit auf (.0 bis .31). Das Datenpaket 4 weist einen Kopf 4.1 einen Datenbereich 4.2 und einen Tail 4.3 auf. Im Tail 4.3 ist ein Wert zur zyklischen Redundanzprüfung CRC32 übertragen. Jedoch ist ein Tail 4.3 und eine zyklische Redundanzprüfung nicht zwingend erforderlich. Der Kopf 4.1 des Datenpakets 4 weist eine Kennung MRD auf, die den Typ des Datenpakets 4 für eine Kommunikationsrichtung für Nutzdaten D1, D2 von mit dem Bus 40 verbundenen Slaves 100, 200, 300 (dargestellt z.B. in Figur 1 oder Figur 3) zum Master 900 (dargestellt z.B. in Figur 1 oder Figur 4) festlegt. Zudem weist der Kopf 4.1 des Datenpakets 4 im Ausführungsbeispiel der Figur 2 eine Längenangabe LP über die Länge LH des Datenpakets 4, eine Master-Priorität PP und eine Prioritäts-Nachricht LPC auf. Der Kopf 4.1 wird dabei durch den Master 900 erzeugt, wobei die Slaves 100, 200, 300 eingerichtet sind, die Datenfelder MRD, LP, PP, LPC des Kopfes 4.1 auszulesen.

In den Figuren 2, 2a und 2b ist das gleiche Datenpaket 4 dargestellt, wobei jedoch in den Figuren 2a und 2b Änderungen des Datenbereichs 4.2 durch Slaves 100, 200, 300 erfolgt sind. Figur 2 zeigt das Datenpaket 4 im Ausgangszustand, wie dieses von einem Master 900 generierbar ist. Der Datenbereich 4.2 ist leer und weist daher den unbeschriebenen Abschnitt ND auf. Lediglich die Daten im Kopf 4.1 sind durch den Master erzeugt. In den Figuren 2, 2a und 2b ist das Ausführungsbeispiel ersichtlich, in dem das Datenpaket 4 eine feste Länge LH aufweist, die vom Master 900 festgelegt ist. Basierend auf der Länge LH des Datenpakets 4 schreibt der Master 900 die Längenangabe LP in den Kopf 4.1 des Datenpakets 4. Weder die Länge LH noch die Längenangabe LP können durch die Slaves 100, 200, 300 geändert werden.

Die Slaves 100, 200, 300 sind zudem eingerichtet, im Kopf 4.1 nur die Prioritäts-Nachricht LPC zu ändern, insbesondere zu inkrementieren oder zu überschreiben. Die Slaves 100, 200, 300 sind eingerichtet, mittels der Prioritäts-Nachricht LPC dem Master 900 mitzuteilen, dass eine zu den Nutzdaten D1 zugehörige Nutzdaten-Priorität P1 kleiner ist als die Master-Priorität PP. Entsprechend kann der Master 900 darauf reagieren und basierend auf der Nachricht LPC ein neues Datenpaket 4 mit angepasster Master-Priorität PP erzeugen.

Im Datenbereich 4.2 des Datenpakets 4 des Ausführungsbeispiels der Figur 2a ist ein erstes Segment 10 gebildet. Dieses erste Segment 10 ist durch einen Slave 100 in den Datenbereich 4.2 des Datenpakets 4 geschrieben. Das erste Segment 10 weist einen ersten Segment-Kopf 1.1 und einen ersten Segment-Nutzdatenbereich 1.2 auf, in dem erste Nutzdaten D1 des Slaves 100 geschrieben sind. Mit diesem ersten Segment 10 wird das Datenpaket 4 von einem in der Übertragungsstrecke des Busses 40 nachfolgendem Slave 200 empfangen.

Im Ausführungsbeispiel der Figur 2a ist im ersten Segment-Kopf 1.1 eine erste Adresse A1, eine erste Segment-Länge L1 und ein erster Zählerwert C1 vorhanden. Der erste Zählerwert C1 ist beispielweise als Nachricht von einem insbesondere nachfolgenden Slave 200, 300 an den Master 900 definiert. Könnte der nachfolgende Slave 200 beispielweise in den unbeschriebenen Abschnitt ND seine Nutzdaten D2 nicht schreiben, könnte der zweite Slave 200 den ersten Zählerwert C1 erhöhen (dieser Fall ist in Figur 2a nicht dargestellt).

Im Datenbereich 4.2 des Datenpakets 4 des Ausführungsbeispiels der Figur 2b sind mehrere Segmente 10, 20 gebildet. Grundsätzlich könnte jedes Segment 10, 20 an einer beliebigen Stelle innerhalb des Datenbereichs 4.2 positioniert sein. Vorzugsweise sind die Daten innerhalb des Datenbereichs 4.2 jedoch nicht fragmentiert. Im Ausführungsbeispiel der Figur 2b grenzen das erste Segment 10 und das zweite Segment 20 aneinander. Vorteilhafterweise wird der Datenbereich 4.2 ausgehend von dem Kopf 4.1 oder dem Tail 4.3 befüllt. Im Ausführungsbeispiel der Figur 2b grenzt das erste Segment 10 unmittelbar an den Kopf 4.1 und das zweite Segment 20 grenzt unmittelbar an das erste Segment 10. Die Segmente 10, 20 überschreiben dabei den zuvor unbeschriebenen Abschnitt ND, der beispielweise ausschließlich Nullwerte oder Einserwerte oder zugelassene Zufallswerte oder vorbestimmte Bitmuster aufweist.

Das zweite Segment 20 weist einen zweiten Segment-Kopf 2.1 und einen zweiten Segment-Nutzdatenbereich 2.2 auf, in dem zweite Nutzdaten D2 geschrieben sind. Im Ausführungsbeispiel der Figur 2b ist im zweiten Segment-Kopf 2.1 eine zweite Adresse A2, eine zweite Segment-Länge L2 und ein zweiter Zählerwert C2 vorhanden. Der zweite Zählerwert C2 ist beispielweise als Nachricht von einem Slave 300 an den Master 900 definiert. Im Ausführungsbeispiel der Figur 2b gibt es ausreichend Raum für einen Schluss-Segment-Kopf 0.1' nach dem letzten Nutzdatenbereich 2.2. Entsprechend hat der zuletzt in den Datenbereich 4.2 schreibende Slave 200 einen Schluss-Segment-Kopf 0.1' an den letzten Nutzdatenbereich 2.2 angehängt. Dabei besteht die Adresse A und die Länge L und der Zählerwert C zunächst aus Nullwerten 0x00. Dieser Zustand nur mit Nullwerten ist in Figur 2b jedoch nicht dargestellt.

Im Ausführungsbeispiel der Figur 2b schließt sich an den Schluss-Segment-Kopf 0.1' noch ein unbeschriebener Abschnitt ND an. Dieser ist im Ausführungsbeispiel der Figur 2b für alle anderen noch folgenden Slaves jedoch zu klein um Nutzdaten einzuschreiben. Im Ausführungsbeispiel der Figur 2b hat der Zählerwert C den von Null verschiedenen Wert 0x01, der z.B. durch Slave 300 inkrementiert wurde, da dieser Slave 300 seine Nutzdaten nicht in den Datenbereich 4.2 schreiben konnte. Vorteilhafterweise ist der Master 900 eingerichtet, die während der Übertragung feste Größe aufeinander folgender Datenpakete 4 im laufenden Betrieb dynamisch anzupassen, basierend auf einer Nachricht, insbesondere zumindest eines der Felder LPC, C1, C2, C.

In Figur 3 ist ein Slave 100 eines Bussystems als Blockschaltplan schematisch dargestellt. Der Slave 100 weist eine erste Schnittstelle 110 (PORT10) und eine zweite Schnittstelle (PORT11) zur Verbindung mit dem Bus 40 auf. Der Slave 100 ist eingerichtet, über die erste Schnittstelle 110 Busdaten vom Bus 40 zu empfangen und über die zweite Schnittstelle 120 auf den Bus 40 zu senden.

Der Slave 100 weist eine Sende-Empfangs-Schaltung 140 auf, die mit einem Bus 40 über die erste Schnittstelle 110 und die zweite Schnittstelle 120 verbunden ist. Im Ausführungsbeispiel der Figur 3 sind die Sende-Empfangs-Schaltung 140, die erste Schnittstelle 110 und die zweite Schnittstelle 120 eingerichtet, genau ein Datensymbol mit einer festen Länge von beispielweise 4, 8, 16 oder 32 Bit zu verarbeiten. Beispielweise lädt die Sende-Empfangs-Schaltung 140 als Datensymbol genau ein in Figur 2 dargestelltes Feld mit 32 Bit. Ein oder mehrere der 32 Bits können nun gelesen und/oder überschrieben werden bevor das Datensymbol über die zweite Schnittstelle 120 an ein folgendes Slave (nicht dargestellt) gesendet wird. Das Empfangen, Verarbeiten und Senden eines Datensymbols dauert dabei eine festgelegte Anzahl von Takten und ist daher zeitlich streng determiniert.

Der Slave 100 weist zudem eine Recheneinheit 150 auf, die mit der Sende-Empfangs-Schaltung 140 verbunden ist. Die Recheneinheit 150 kann als Prozessor ausgebildet sein, im Ausführungsbeispiel der Figur 3 ist die Recheneinheit 150 jedoch als State-Machine (dt. Zustandsmaschine) - beispielweise in einem ASIC oder FPGA - ausgebildet. Der Slave 100 weist einen Speicherbereich 160 auf, der mit der Recheneinheit 150 verbunden ist. Der Speicherbereich 160 ist beispielweise ein adressierbarer Bereich eines RAM. Alternativ kann der Speicherbereich 160 aus mehreren Registern gebildet sein.

Die Sende-Empfangs-Schaltung 140 ist eingerichtet, ein Datenpaket (4, in Figur 2) mit einem Kopf 4.1 und einen Datenbereich 4.2 zu empfangen, wobei der Datenbereich 4.2 einen unbeschriebenen Abschnitt ND aufweisen kann. Die Recheneinheit 150 ist eingerichtet, die Größe des unbeschriebenen Abschnitts ND zu bestimmen. Die Recheneinheit 150 bestimmt die Größe des unbeschriebenen Abschnitts ND beispielsweise basierend auf der Längenangabe LP im Kopf 4.1 des Datenpakets 4, sowie auf Segment-Längenangaben L1, L2 usw..

Die Recheneinheit 150 ist eingerichtet, die Größe des unbeschriebenen Abschnitts ND im Datenbereich 4.1 des Datenpakets 4 und eine Größe SD1 von im Speicherbereich 160 gespeicherten Nutzdaten D1 zu vergleichen. Die Größe SD1 von im Speicherbereich 160 gespeicherten Nutzdaten D1 ist in Figur 3 schematisch dargestellt. Die Recheneinheit 150 und die Sende-Empfangs-Schaltung 140 sind eingerichtet, eine Adresse A1 und die gespeicherten Nutzdaten D1 in ein Segment 10 im Datenbereich 4.1 des Datenpakets 4 zu schreiben, wenn die Größe SD1 der gespeicherten Nutzdaten D1 die Größe des unbeschriebenen Abschnitts ND nicht übersteigt.

Im Ausführungsbeispiel der Figur 3 ist im Speicherbereich 160 eine zu den Nutzdaten D1 zugehörige Nutzdaten-Priorität P1 gespeichert. Der Slave 100 ist eingerichtet, die im Datenpaket enthaltene Master-Priorität (PP in Figur 2) mit der Nutzdaten-Priorität P1 der Nutzdaten D1 zu vergleichen. Der Slave 100 schreibt dann seine Adresse A1 und seine Nutzdaten D1 in ein Segment 10 im Datenbereich 4.1, wenn die Master-Priorität PP nicht höher als die Nutzdaten-Priorität P1 ist.

Im Ausführungsbeispiel der Figur 4 ist ein Master 900 eines Bussystems als Blockschaltbild schematisch dargestellt. Der Master 900 weist eine erste Schnittstelle 911 und eine zweite Schnittstelle 921 zur Verbindung mit einem Bus 40 auf. Der Master 900 ist eingerichtet, über die erste Schnittstelle 911 Datenpakete 4 auf den Bus 40 zu senden und über die zweite Schnittstelle 921 Datenpakete 4 vom Bus 40 zu empfangen. Der Master 900 weist eine Sende-Schaltung 910 (TX) auf, die im Ausführungsbeispiel der Figur 4 mit einem Bus 40 des Bussystems über die Schnittstelle 911 verbunden ist. Der Master 900 weist eine Empfangs-Schaltung 920 (RX) auf, die im Ausführungsbeispiel der Figur 4 mit dem Bus 40 des Bussystems über die zweite Schnittstelle 921 verbunden ist.

Der Master 900 weist eine Recheneinheit 950 auf, die mit der Sende-Schaltung 910 und mit der Empfangs-Schaltung 920 verbunden ist. Im Ausführungsbeispiel der Figur 4 weist die Recheneinheit 950 eine State-Machine 956 FSM (dt. Zustandsautomat) und einen Prozessor 955 (CPU) auf. Zudem weist der Master 900 einen Speicherbereich 960 (RAM) auf. Sowohl die State-Machine 956 der Recheneinheit 950 als auch der Prozessor 955 sind mit dem Speicherbereich 960 zum Lesen und Schreiben verbunden. State Machine 956 und Prozessor 955 sind beispielweise auf einem Halbleiterchip integriert. Dabei ist beispielweise der Prozessor 955 durch eine CPU und die State-Machine 956 durch einen FPGA des Halbleiterchips gebildet.

Im Ausführungsbeispiel der Figur 4 weist der Master 900 zudem eine Transceiver-Schaltung 940 (TRX) zur Verbindung mit einem übergeordnete Bus 80 auf, beispielweise einem EtherCAT-Bus, einem anderen Feldbus mit proprietärem Kommunikationsprotokoll oder einem Bus gemäß der offenen OPC UA und TSN Protokolle. Die Transceiver-Schaltung 940 ist mit der State-Machine 956 der Recheneinheit 950 verbunden.

Die State-Machine 956 der Recheneinheit 950 des Masters 900 ist eingerichtet, ein Datenpaket 4 mit einem Kopf 4.1 und einem Datenbereich 4.2, beispielsweise analog dem Ausführungsbeispiel der Figur 2, zu erzeugen. Der Kopf 4.1 des Datenpakets 4 weist eine Kennung MRD auf, die den Typ des Datenpakets 4 für eine Kommunikationsrichtung für Nutzdaten D1, D2, D3 von mit dem Bus 40 verbundenen Slaves 100, 200, 300 zum Master 900 festlegt. Im Ausführungsbeispiel der Figur 4 ist dargestellt, dass die State-Machine 956 das Datenpaket 4 mit der Kennung MRD, einer Längenangabe LP, einer Master-Priorität PP und einem unbeschriebenen Abschnitt ND im Datenbereich 4.2 erzeugt. Im Ausführungsbeispiel der Figur 4 ist die Recheneinheit 950 des Masters 900 eingerichtet, eine Länge des Datenpakets 4 basierend auf zuvor von den Slaves 100, 200, 300 empfangene Nachrichten zu bestimmen und die Länge des Datenpakets 4 in der Längenangabe LP abzubilden.

Die Sende-Schaltung 910 ist eingerichtet, das erzeugte Datenpaket 4 auf den Bus 40 zu senden. Die Empfangs-Schaltung 920 ist eingerichtet, das Datenpaket 4 vom Bus 40 zu empfangen, nachdem es alle Slaves 100, 200, 300 des Bussystems zumindest teilweise durchlaufen hat. Die Recheneinheit 950 ist eingerichtet, die z.B. in Figur 1 gezeigten Nutzdaten D1 basierend auf einer Adresse A1 zumindest einem Slave 100 zuzuordnen und die zugeordneten Nutzdaten D1 weiterzuverarbeiten. Zur Weiterverarbeitung leitet der Master 900 die Nutzdaten D1 beispielweise über den Transceiver 940 und den übergeordneten Bus 80 an eine Leitstation weiter (in Figur 4 nicht dargestellt). Alternativ kann der Master 900 ein Softwareprogramm aufweisen, dass im Speicherbereich 960 gespeichert ist und durch den Prozessor 950 abarbeitbar ist. Mittels des Softwareprogramms werden die Nutzdaten D1, D2, D3 ausgewertet. Beispielweise ist der Master 900 eingerichtet basierend auf der Auswertung der Nutzdaten D1, D2, D3 die Slaves 100, 200, 300 neu zu konfigurieren.

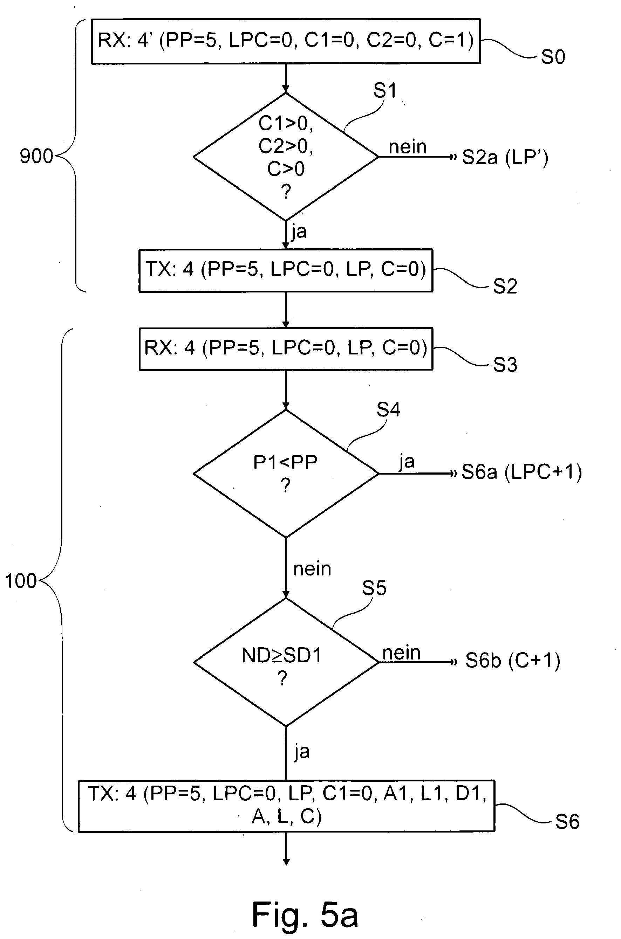

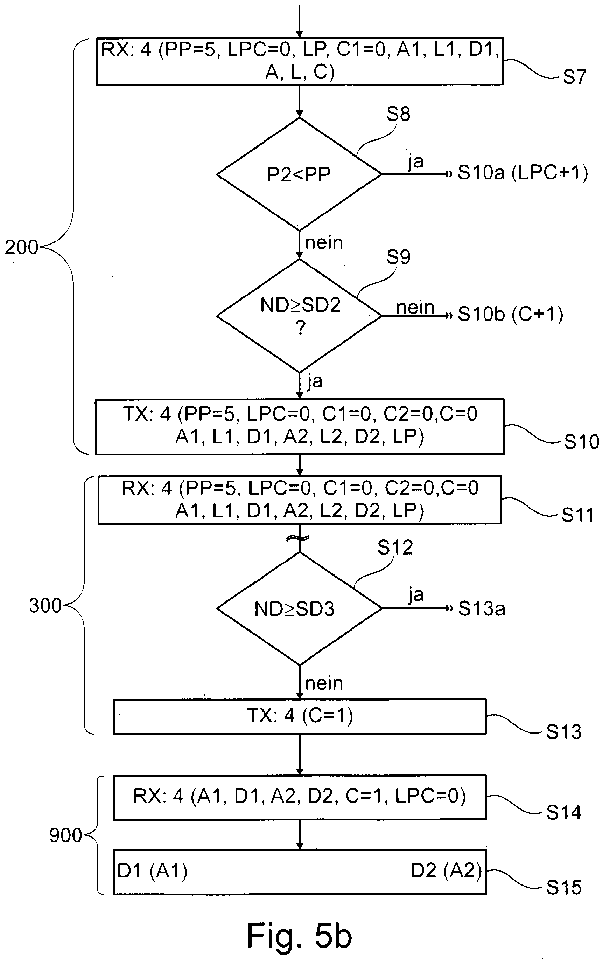

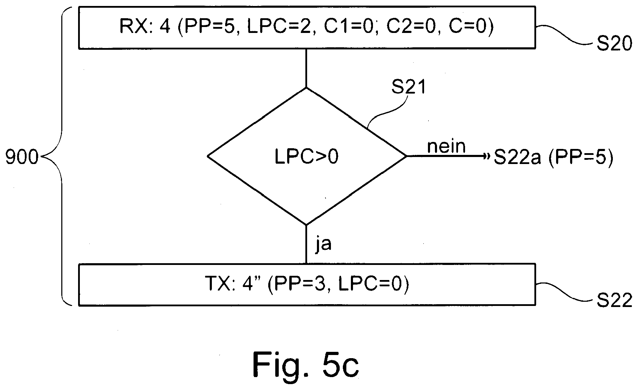

In den Figuren 5a, 5b und 5c sind Teile von Verfahrensabläufen durch Ablaufdiagramme schematisch dargestellt. Im Ausführungsbeispiel der Figur 5a erfolgen die Verfahrensschritte S0 bis S2 im Master 900 und die Verfahrensschritte S3 bis S6 in einem ersten Slave 100. Im Ausführungsbeispiel der Figur 5b erfolgen die Verfahrensschritte S7 bis S10 in einem zweiten Slave 200 und die Verfahrensschritte S11 bis S13 in einem dritten Slave 300 und die Verfahrensschritte S14 und S15 im Master 900. Im Ausführungsbeispiel der Figur 5c erfolgen die Verfahrensschritte S20 bis S22 im Master 900. Die gezeigten Verfahrensschritte sind dabei nicht abschließend, so können weitere nicht dargestellte Verfahrensschritte eingefügt oder zwei oder mehr Verfahrensschritte zusammengefasst werden.

In einem Schritt S0 wird von dem Master 900 ein vorhergehendes Datenpaket 4' empfangen. Dieses vorhergehende Datenpaket 4' wurde ursprünglich vom Master 900 ebenfalls gesendet (in Figur 5a nicht dargestellt). Das vorhergehende Datenpaket 4' wurde mit der Master-Priorität PP=5 gesendet. Da die Slaves 100, 200, 300 die Master-Priorität PP=5 nicht ändern können, wird dieses vorhergehende Datenpaket 4' mit unveränderter Master-Priorität PP=5 empfangen. Weiterhin enthält das vorhergehende Datenpaket 4' die Nachricht LPC=0, C1=0, C2=0 und C=1. Zur Bedeutung der einzelnen Felder der Nachricht wird auf die Erläuterungen zu Figur 2 verwiesen.

Im Schritt S1 des Ausführungsbeispiels der Figur 5a wird von dem Master 900 überprüft, ob eine Nachricht vorliegt, indem die Zähler-Felder der Segmente C1, C2 und das Zählerfeld C des Schluss-Segment-Kopfs 0.1' mit Nullwerten verglichen werden. Ist entsprechend des Vergleichs ein Zählerwert ungleich Null, folgt Schritt S2, sind alle Zählerwert gleich Null, folgt Schritt 2a.

Im Schritt S2 des Ausführungsbeispiels der Figur 5a wird ein Datenpaket 4 durch den Master 900 gesendet, mit den Werten PP=5, LPC=0, der Längenangabe LP und einem Schluss-Segment-Kopf 0.1 mit dem Zählerwert C=0.

Im nicht näher erläuterten Schritt S2a des Ausführungsbeispiels der Figur 5a würde ggf. ein Datenpaket 4 erst später, nach einem Ablauf eines Timers gesendet werden oder es würde ein Datenpaket mit verringerter Länge LP' gesendet werden.

Im Ausführungsbeispiel der Figur 5a folgt auf Schritt S2 der Schritt S3. Im Schritt S3 wird durch den ersten Slave 100 das Datenpaket 4 empfangen. Im Schritt S4 des Ausführungsbeispiels der Figur 5a wird die Master-Priorität PP mit der ersten Nutzdaten-Priorität P1 der ersten Nutzdaten D1 des ersten Slaves 100 verglichen. Ist die erste Nutzdaten-Priorität P1 kleiner als die Master-Priorität PP, so folgt Schritt 6a, indem von dem Slave 100 der Prioritäts-Zählerwert LPC im Kopf 4.1 des Datenpakets 4 um Eins erhöht wird (LPC+1).

Im Ausführungsbeispiel der Figur 5a sei jedoch die erste Nutzdaten-Priorität P1 gleich oder größer als die Master-Priorität PP, so dass in diesem Fall Schritt S5 folgt. Im Schritt S5 wird eine erste Größe SD1 der ersten Nutzdaten D1 mit einer Größe eines unbeschriebenen Abschnitts ND verglichen. Ist die erste Größe SD1 der ersten Nutzdaten D1 größer als die Größe des unbeschriebenen Abschnitts ND, folgt Schritt S6b, wobei der Slave 100 dem Master 900 eine Nachricht übermittelt, indem der Zählerwert C um Eins erhöht wird (C+1).

Im Ausführungsbeispiel der Figur 5a sei jedoch die erste Größe SD1 der ersten Nutzdaten D1 gleich oder kleiner als die Größe des unbeschriebenen Abschnitts ND, sodass Schritt S6 folgt. Im Schritt 6 sendet der erste Slave 100 das Datenpaket 4 weiter, wobei ein Teil des unbeschriebenen Abschnitts ND mit einem ersten Segment 10 überschrieben wird, wobei das erste Segment 10 eine erste Adresse A1, eine erste Segment-Längenangabe L1 und erste Nutzdaten D1 aufweist. Zudem kann der erste Slave 100 einen leeren Segment-Kopf 0.1 mit den Feldern A, L und C mit Nullwerten 0x00 an die ersten Nutzdaten D1 anhängen.

Im Ausführungsbeispiel der Figur 5b ist ein anderer Teil eines Verfahrensablaufs durch ein Ablaufdiagramm schematisch dargestellt, das sich an den in Figur 5a dargestellten Teil eines Verfahrensablaufs anschließen kann.

Im Ausführungsbeispiel der Figur 5b erfolgt zunächst Schritt S7. Im Schritt S7 wird durch den zweiten Slave 200 das Datenpaket 4 empfangen. Im Schritt S8 des Ausführungsbeispiels der Figur 5b wird die Master-Priorität PP mit der zweiten Nutzdaten-Priorität P2 der zweiten Nutzdaten D2 des zweiten Slaves 200 verglichen. Ist die zweite Nutzdaten-Priorität P2 kleiner als die Master-Priorität PP, so folgt Schritt 10a, indem von dem zweiten Slave 200 der Prioritäts-Zählerwert LPC im Kopf 4.1 des Datenpakets 4 um Eins erhöht wird (LPC+1). Andere Werte A, L, C, etc. können unverändert bleiben.

Im Ausführungsbeispiel der Figur 5b sei jedoch die zweite Nutzdaten-Priorität P2 gleich oder größer als die Master-Priorität PP, so dass in diesem Fall Schritt S9 folgt. Im Schritt S9 wird eine zweite Größe SD2 der zweiten Nutzdaten D2 mit einer Größe eines noch unbeschriebenen Abschnitts ND verglichen. Ist die zweite Größe SD2 der zweiten Nutzdaten D2 größer als die Größe des noch unbeschriebenen Abschnitts ND, folgt Schritt S10b, wobei der zweite Slave 200 dem Master 900 eine Nachricht übermittelt, indem der Zählerwert C um Eins erhöht wird (C+1). Andere Werte A, C, etc. können unverändert bleiben.

Im Ausführungsbeispiel der Figur 5b ist jedoch die zweite Größe SD2 der zweiten Nutzdaten D2 gleich oder kleiner als die Größe des noch unbeschriebenen Abschnitts ND, so dass Schritt S10 folgt. Im Schritt S10 sendet der zweite Slave 200 das Datenpaket 4 weiter, wobei ein Teil des noch unbeschriebenen Abschnitts ND mit einem zweiten Segment 20 überschrieben wird, wobei das zweite Segment 20 eine zweite Adresse A2, eine zweite Segment-Längenangabe L2 und zweite Nutzdaten D2 aufweist.

Im Ausführungsbeispiel der Figur 5b wird im Schritt S11 das Datenpaket 4 mit dem ersten Segment 10 und dem zweiten Segment 20 und einem verbleibenden unbeschriebenen Abschnitt ND empfangen. In Figur 5b sind die Schritte des dritten Slaves 300 für eine bessere Übersichtlichkeit verkürzt dargestellt. Vorzugsweise arbeiten alle Slaves 100, 200, 300 die gleichen Schritte ab. Im Schritt S12 wird eine Größe des verbleibenden unbeschriebenen Abschnitts ND mit einer dritten Größe SD3 dritter Nutzdaten D3 durch den dritten Slave 300 verglichen. Ist die Größe des verbleibenden unbeschriebenen Abschnitts ND gleich oder größer als die dritte Größe SD3 der dritten Nutzdaten D3, folgt Schritt 13a (nicht näher erläutert).

Im Ausführungsbeispiel der Figur 5b ist der Fall dargestellt, dass die Größe des verbleibenden unbeschriebenen Abschnitt ND kleiner als die dritte Größe SD3 der dritten Nutzdaten D3 ist, entsprechend folgt Schritt S13. Dabei wird im Schritt 13 vom dritten Slave 300 aufgrund des zu kleinen verbleibenden unbeschriebenen Abschnitts ND kein Segment in das Datenpaket 4 eingefügt, sondern der dritte Slave 300 erhöht nur den Zählerwert auf C=1.

Im Ausführungsbeispiel der Figur 5b wird im Schritt S14 das Datenpaket 4 mit dem ersten Segment 10 und dem zweiten Segment 20 und dem Zählerwert C=1 vom Master 900 empfangen. Zudem werden weitere Symbole vom Master 900 empfangen, wie beispielweise im Ausführungsbeispiel der Figur 2b dargestellt.

Im Ausführungsbeispiel der Figur 5b werden im folgenden Schritt S15 durch den Master 900 die ersten Nutzdaten D1 zum ersten Slave 100 basierend auf der ersten Adresse A1 zugeordnet und die zweiten Nutzdaten D2 zum zweiten Slave 200 basierend auf der zweiten Adresse A2 zugeordnet. Zudem werden im Schritt S15 die zugeordneten ersten Nutzdaten D1 und zweiten Nutzdaten D2 durch den Master 900 weiterverarbeitet. Die Weiterverarbeitung umfasst im Ausführungsbeispiel der Figur 5b z.B. ein Speichern und Weiterleiten und Auswerten der zugeordneten Nutzdaten D1, D2.

In Figur 5c ist ein Ausschnitt eines Verfahrensablaufs eines anderen Ausführungsbeispiels schematisch dargestellt. Dabei wird in einem Schritt S20 ein Datenpaket 4 durch den Master 900 empfangen. Das Datenpaket 4 weist eine Master-Priorität PP = 5 und eine Prioritäts-Nachricht LPC = 2 auf. Durch den Master 900 wird die Master-Priorität PP = 5 und Prioritäts-Nachricht LPC = 2 ausgewertet. Im in Figur 5c dargestellten Fall konnten somit zwei Slaves aufgrund zu hoher Master-Priorität PP keine Nutzdaten in das Datenpaket 4 schreiben. Zur Auswertung wird im Schritt S21 durch den Master 900 die Prioritäts-Nachricht LPC mit einem Nullwert verglichen. Ist die Prioritäts-Nachricht LPC nicht größer Null, folgt Schritt 22a. Dabei wird in Schritt 22a z.B. ein weiteres Datenpaket (nicht dargestellt) mit gleicher Master-Priorität PP = 5 erneut gesendet.

Im Ausführungsbeispiel der Figur 5c ist die Prioritäts-Nachricht LPC = 2 größer Null, so dass Schritt S22 folgt. Im Schritt S22 wird durch den Master 900 ein dem Datenpaket 4 folgendes Datenpaket 4" gesendet, wobei die Master-Priorität PP = 3 verringert und die Prioritäts-Nachricht LPC auf Null gesetzt wird. Entsprechend können mit dem folgenden Datenpaket 4" auch Nutzdaten niedriger Priorität (z.B. 3 oder 4) vom Slave zum Master 900 übertragen werden.

Die zuvor erläuterten Ausführungsbeispiele von Verfahrensabschnitten sind rein beispielhaft. So wird abhängig von Aufbau und Konfiguration des Systems eine Anpassung der Schritte erforderlich sein können, insbesondere können die Schritte in einer andern Reihenfolge durchgeführt werden, oder es können weitere Schritte hinzugefügt werden, oder es können Verfahrensschritte ausgelassen werden.

### Bezugszeichenliste

- 0.1, 0.1': Kopf
- 1: System, Bussystem
- 1.1, 2.1: Segment-Kopf
- 1.2, 2.2: Segment-Datenbereich
- 4, 4', 4": Datenpaket
- 4.1: Kopf, Header
- 4.2: Datenbereich, Payload
- 4.3: Tail
- 10, 20: Segment
- 40: Bus, Lokalbus
- 80: übergeordnet Bus, Feldbus
- 100, 200, 300: Slave
- 110, 210, 310: Schnittstelle
- 120, 220, 320: Schnittstelle
- 140: Sende-Empfangs-Schaltung
- 150, 250, 350: Recheneinheit
- 160, 260, 360: Speicherbereich
- 900: Master
- 910: Sende-Schaltung
- 911: Schnittstelle
- 920: Empfangs-Schaltung
- 921: Schnittstelle
- 940: Transceiver
- 950: Rechenschaltung
- 955: Prozessor
- 956: State-Machine
- 960: Speicherbereich
- A, A1, A2: Adresse
- C, C1, C2: Zählerwert
- D1, D2, D3: Nutzdaten
- L, L1, L2: Segment-Länge
- LH: Datenpaketlänge
- LP: Längenangabe
- LPC: Prioritäts-Nachricht
- MRD: Kennung
- ND: unbeschriebener Abschnitt
- P1, P2: Nutzdaten-Priorität
- PP: Master-Priorität
- RX: Empfang
- S0 bis S22: Schritt
- SD1, SD2, SD3: Größe von Nutzdaten
- TX: Senden

## Patentansprüche

1. System (1),
- mit einem Master (900),
- mit einem ersten Slave (100),
- mit einem zweiten Slave (200),
- mit einem Bus (40), wobei durch den Bus (40) der Master (900) und der erste Slave (100) und der zweite Slave (200) miteinander verbunden sind, um ein Datenpaket (4) vom Master (900) über den ersten Slave (100) und über den zweiten Slave (200) zurück an den Master (900) zu übertragen,
- bei dem der Master (900) eingerichtet ist, das Datenpaket (4) mit einem Kopf (4.1) und einem Datenbereich (4.2) zu erzeugen und das erzeugte Datenpaket (4) auf den Bus (40) zu senden,
- bei dem der erste Slave (100) eingerichtet ist, seine erste Adresse (A1) und erste Nutzdaten (D1) in ein erstes Segment (10) des Datenbereichs (4.2) des Datenpakets (4) zu schreiben,
- bei dem der zweite Slave (200) eingerichtet ist, seine zweite Adresse (A2) und zweite Nutzdaten (D2) in ein zweites Segment (20) des Datenbereichs (4.2) des Datenpakets (4) zu schreiben,
- bei dem der Master (900) eingerichtet ist, das Datenpaket (4) vom Bus (40) zu empfangen und die ersten Nutzdaten (D1) basierend auf der ersten Adresse (A1) dem ersten Slave (100) zuzuordnen und die zweiten Nutzdaten (D2) basierend auf der zweiten Adresse (A2) dem zweiten Slave (200) zuzuordnen und die zugeordneten ersten Nutzdaten (D1) und zugeordneten zweiten Nutzdaten (D2) weiterzuverarbeiten.

2. System (1) nach Anspruch 1,
- bei dem der Datenbereich (4.2) des Datenpakets (4) während der Übertragung über den Bus (40) eine feste Größe aufweist, und
- bei dem der Master (900) eingerichtet ist, die feste Größe des Datenbereichs (4.2) festzulegen.

3. System (1) nach Anspruch 2,
- bei dem der Master (900) eingerichtet ist, die feste Größe des Datenbereichs (4.2) des Datenpakets (4) basierend auf einer Nachricht (LPC, C1, C2, C) zu bestimmen, insbesondere wobei die Nachricht (LPC, C1, C2, C) in einem vorhergehend empfangenen Datenpaket (4') enthalten ist, und
- bei dem der erste Slave (100) und/oder der zweite Slave (200) eingerichtet sind, die Nachricht (LPC, C1, C2, C) zu senden.

4. System (1) nach einem der vorhergehenden Ansprüche,
- bei dem der erste Slave (100) eingerichtet ist, eine Größe eines unbeschriebenen Abschnitts (ND) im Datenbereich (4.2) des Datenpakets (4) und eine Größe der ersten Nutzdaten (D1) zu bestimmen, und
- bei dem der erste Slave (100) eingerichtet ist, seine erste Adresse (A1) und seine ersten Nutzdaten (D1) in das erste Segment (10) zu schreiben, wenn die Größe der ersten Nutzdaten (D1) die Größe des unbeschriebenen Abschnitts (ND) nicht übersteigt.

5. System (1) nach den Ansprüchen 3 und 4,
- bei dem der erste Slave (100) eingerichtet ist, die Nachricht (C1, C2, C) in den Kopf (4.1) und/oder in den Datenbereich (4.2) des Datenpakets (4) zu schreiben, wenn die Größe der ersten Nutzdaten (D1) die Größe des unbeschriebenen Abschnitts (ND) übersteigt.

6. System (1) nach einem der vorhergehenden Ansprüche,
- bei dem der zweite Slave (20) eingerichtet ist, eine Größe eines unbeschriebenen Abschnitts (ND) im Datenbereich (4.2) des Datenpakets (4) und eine Größe der zweiten Nutzdaten (D2) zu bestimmen, und
- bei dem der zweite Slave (200) eingerichtet ist, seine zweite Adresse (A2) und seine zweiten Nutzdaten (D2) in das zweite Segment (20) zu schreiben, wenn die Größe der zweiten Nutzdaten (D2) die Größe des unbeschriebenen Abschnitts (ND) nicht übersteigt.

7. System nach den Ansprüchen 3 und 6,
- bei dem der zweite Slave (200) eingerichtet ist, die Nachricht (C1, C2, C) in den Kopf (4.1) oder in den Datenbereich (4.2) des Datenpakets (4) zu schreiben, wenn die Größe der zweiten Nutzdaten (D2) die Größe des unbeschriebenen Abschnitts (ND) übersteigt.

8. System (1) nach einem der vorhergehenden Ansprüche,
- bei dem der Master (900) eingerichtet ist, das Datenpaket (4) basierend auf einem bestimmten Ereignis und/oder zyklisch zu erzeugen.

9. System (1) nach einem der vorhergehenden Ansprüche,
- bei dem der Master (900) eingerichtet ist, eine Master-Priorität (PP) in das Datenpaket (4) einzufügen.

10. System (1) nach Anspruch 9,
- bei dem der erste Slave (100) eingerichtet ist, die im Datenpaket (4) enthaltene Master-Priorität (PP) mit einer ersten Nutzdaten-Priorität (P1) der ersten Nutzdaten (D1) zu vergleichen, und
- bei dem der erste Slave (100) eingerichtet ist, seine erste Adresse (A1) und seine ersten Nutzdaten (D1) in das erste Segment (10) zu schreiben, wenn die Master-Priorität (PP) nicht höher als die erste Nutzdaten-Priorität (P1) ist.

11. System (1) nach Anspruch 10,
- bei dem der erste Slave (100) eingerichtet ist, eine Prioritäts-Nachricht (LPC) in den Kopf (4.1) und/oder in den Datenbereich (4.2) des Datenpakets (4) zu schreiben, wenn die Master-Priorität (PP) höher als die erste Nutzdaten-Priorität (P1) ist.

12. System (1) nach einem der vorhergehenden Ansprüche,
- bei dem der zweite Slave (200) eingerichtet ist, die im Datenpaket (4) enthaltene Master-Priorität (PP) mit einer zweiten Nutzdaten-Priorität (P2) der zweiten Nutzdaten (D2) zu vergleichen, und
- bei dem der zweite Slave (200) eingerichtet ist, seine zweite Adresse (A2) und seine zweiten Nutzdaten (D2) in das zweite Segment (20) zu schreiben, wenn die Master-Priorität (PP) nicht höher als die zweite Nutzdaten-Priorität (P2) ist.

13. System (1) nach Anspruch 12,
- bei dem der zweite Slave (200) eingerichtet ist, eine Prioritäts-Nachricht (LPC) in den Kopf (4.1) und/oder in den Datenbereich (4.2) des Datenpakets (4) zu schreiben, wenn die Master-Priorität (PP) höher als die zweite Nutzdaten-Priorität (P2) ist.

14. System (1) nach einem der Ansprüche 11 oder 13,
- bei dem der Master (900) eingerichtet ist, die Prioritäts-Nachricht (LPC) auszuwerten und die Master-Priorität (PP) für ein folgendes Datenpaket (4") basierend auf der Auswertung der Prioritäts-Nachricht (LPC) anzupassen.

15. System (1) nach einem der vorhergehenden Ansprüche,
- bei dem der erste Slave (100) und/oder zweite Slave (200) eingerichtet ist, einen unbeschriebenen Abschnitt (ND) im Datenbereich (4.2) des Datenpakets (4) zu bestimmen basierend auf
∘ einer Paketlängenangabe (LP) im Kopf (4.1) des Datenpakets (4), und/oder
∘ einem Segment-Kopf (1.1, 2.1) innerhalb des Datenbereichs (4.2) des Datenpakets (4), und/oder
∘ einem Abzählen bereits beschriebener Abschnitte (10, 20, 0.1) des Datenbereichs (4.2) des Datenpakets (4).

16. Verfahren zum Betrieb eines Bussystems (1), aufweisend
- Erzeugen eines Datenpakets (4) mit einem Kopf (4.1) und einem Datenbereich (4.2) durch einen Master (900) des Bussystems (1),
- Senden des Datenpaket (4) vom Master (900) an einen ersten Slave (100) des Bussystems (1) und an einen zweiten Slave (200) des Bussystems (1),
- wobei das Datenpaket (4) vom Master (900) über den ersten Slave (100) und über den zweiten Slave (200) zurück an den Master (900) übertragen wird,
- Schreiben einer ersten Adresse (A1) und erster Nutzdaten (D1) des ersten Slaves (100) in ein erstes Segment (10) des Datenbereichs (4.2) des Datenpakets (4) durch den ersten Slave (100),
- Schreiben einer zweiten Adresse (A2) und zweiter Nutzdaten (D2) eines zweiten Slaves (200) in ein zweites Segment (20) des Datenbereichs (4.2) des Datenpakets (4) durch den zweiten Slave (200),
- Empfangen des Datenpakets (4) mit dem ersten Segment (10) und dem zweiten Segment (20) vom Bus (40) durch den Master (900),
- Zuordnen der ersten Nutzdaten (D1) zum ersten Slave (100) basierend auf der ersten Adresse (A1) durch den Master (900),
- Zuordnen der zweiten Nutzdaten (D2) zum zweiten Slave (200) basierend auf der zweiten Adresse (A2) durch den Master (900), und
- Weiterverarbeiten der zugeordneten ersten Nutzdaten (D1) und zugeordneten zweiten Nutzdaten (D2) durch den Master (900).

## Claims

1. System (1),
- having a master (900),
- having a first slave (100),
- having a second slave (200),
- having a bus (40), wherein the bus (40) connects the master (900) and the first slave (100) and the second slave (200) to one another in order to transmit a data packet (4) from the master (900) via the first slave (100) and via the second slave (200) back to the master (900),
- in which the master (900) is configured to generate the data packet (4) with a header (4.1) and a data area (4.2) and to send the generated data packet (4) to the bus (40),
- in which the first slave (100) is configured to write its first address (A1) and first payload data (D1) to a first segment (10) of the data area (4.2) of the data packet (4),
- in which the second slave (200) is configured to write its second address (A2) and second payload data (D2) to a second segment (20) of the data area (4.2) of the data packet (4),
- in which the master (900) is configured to receive the data packet (4) from the bus (40) and to assign the first payload data (D1) to the first slave (100) on the basis of the first address (A1) and to assign the second payload data (D2) to the second slave (200) on the basis of the second address (A2) and to process the assigned first payload data (D1) and assigned second payload data (D2) further.

2. System (1) according to Claim 1,
- in which the data area (4.2) of the data packet (4) has a fixed size during the transmission via the bus (40), and
- in which the master (900) is configured to define the fixed size of the data area (4.2).

3. System (1) according to Claim 2,
- in which the master (900) is configured to determine the fixed size of the data area (4.2) of the data packet (4) on the basis of a message (LPC, C1, C2, C), the message (LPC, C1, C2, C) in particular being contained in a previously received data packet (4'), and
- in which the first slave (100) and/or the second slave (200) are configured to send the message (LPC, C1, C2, C).

4. System (1) according to one of the preceding claims,
- in which the first slave (100) is configured to determine a size of an unwritten section (ND) in the data area (4.2) of the data packet (4) and a size of the first payload data (D1), and
- in which the first slave (100) is configured to write its first address (A1) and its first payload data (D1) to the first segment (10) if the size of the first payload data (D1) does not exceed the size of the unwritten section (ND).

5. System (1) according to Claims 3 and 4,
- in which the first slave (100) is configured to write the message (C1, C2, C) to the header (4.1) and/or to the data area (4.2) of the data packet (4) if the size of the first payload data (D1) exceeds the size of the unwritten section (ND).

6. System (1) according to one of the preceding claims,
- in which the second slave (20) is configured to determine a size of an unwritten section (ND) in the data area (4.2) of the data packet (4) and a size of the second payload data (D2), and
- in which the second slave (200) is configured to write its second address (A2) and its second payload data (D2) to the second segment (20) if the size of the second payload data (D2) does not exceed the size of the unwritten section (ND).

7. System according to Claims 3 and 6,
- in which the second slave (200) is configured to write the message (C1, C2, C) to the header (4.1) or to the data area (4.2) of the data packet (4) if the size of the second payload data (D2) exceeds the size of the unwritten section (ND).

8. System (1) according to one of the preceding claims,
- in which the master (900) is configured to generate the data packet (4) on the basis of a specific event and/or cyclically.

9. System (1) according to one of the preceding claims,
- in which the master (900) is configured to insert a master priority (PP) into the data packet (4).

10. System (1) according to Claim 9,
- in which the first slave (100) is configured to compare the master priority (PP) contained in the data packet (4) with a first payload data priority (P1) of the first payload data (D1), and
- in which the first slave (100) is configured to write its first address (A1) and its first payload data (D1) to the first segment (10) if the master priority (PP) is not higher than the first payload data priority (P1).

11. System (1) according to Claim 10,
- in which the first slave (100) is configured to write a priority message (LPC) to the header (4.1) and/or to the data area (4.2) of the data packet (4) if the master priority (PP) is higher than the first payload data priority (P1).

12. System (1) according to one of the preceding claims,
- in which the second slave (200) is configured to compare the master priority (PP) contained in the data packet (4) with a second payload data priority (P2) of the second payload data (D2), and
- in which the second slave (200) is configured to write its second address (A2) and its second payload data (D2) to the second segment (20) if the master priority (PP) is not higher than the second payload data priority (P2).

13. System (1) according to Claim 12,
- in which the second slave (200) is configured to write a priority message (LPC) to the header (4.1) and/or to the data area (4.2) of the data packet (4) if the master priority (PP) is higher than the second payload data priority (P2).

14. System (1) according to either of Claims 11 and 13,
- in which the master (900) is configured to evaluate the priority message (LPC) and to adapt the master priority (PP) for a following data packet (4") on the basis of the evaluation of the priority message (LPC).

15. System (1) according to one of the preceding claims,
- in which the first slave (100) and/or the second slave (200) is configured to determine an unwritten section (ND) in the data area (4.2) of the data packet (4) on the basis of
° a packet length statement (LP) in the header (4.1) of the data packet (4), and/or
° a segment header (1.1, 2.1) within the data area (4.2) of the data packet (4), and/or
° a count of already written sections (10, 20, 0.1) of the data area (4.2) of the data packet (4) .

16. Method for operating a bus system (1), comprising
- generating a data packet (4) with a header (4.1) and a data area (4.2) by way of a master (900) of the bus system (1),
- sending the data packet (4) from the master (900) to a first slave (100) of the bus system (1) and to a second slave (200) of the bus system (1),
- wherein the data packet (4) is transmitted from the master (900) via the first slave (100) and via the second slave (200) back to the master (900),
- writing a first address (A1) and first payload data (D1) of the first slave (100) to a first segment (10) of the data area (4.2) of the data packet (4) by way of the first slave (100),
- writing a second address (A2) and second payload data (D2) of a second slave (200) to a second segment (20) of the data area (4.2) of the data packet (4) by way of the second slave (200),
- receiving the data packet (4) containing the first segment (10) and the second segment (20) from the bus (40) by way of the master (900),
- assigning the first payload data (D1) to the first slave (100) on the basis of the first address (A1) by way of the master (900),
- assigning the second payload data (D2) to the second slave (200) on the basis of the second address (A2) by way of the master (900), and
- processing the assigned first payload data (D1) and assigned second payload data (D2) further by way of the master (900).

## Revendications

1. Système (1),
- comprenant un maître (900),
- comprenant un premier esclave (100),
- comprenant un deuxième esclave (200),
- comprenant un bus (40), le maître (900), le premier esclave (100) et le deuxième esclave (200) étant reliés entre eux par le bus (40) afin de transmettre un paquet de données (4) du maître (900) par le biais du premier esclave (100) et par le biais du deuxième esclave (200) en retour au maître (900),
- avec lequel le maître (900) est conçu pour générer le paquet de données (4) avec un en-tête (4.1) et une zone de données (4.2) et émettre le paquet de données (4) généré sur le bus (40),
- avec lequel le premier esclave (100) est conçu pour écrire sa première adresse (A1) et des premières données utiles (D1) dans un premier segment (10) de la zone de données (4.2) du paquet de données (4),
- avec lequel le deuxième esclave (200) est conçu pour écrire sa deuxième adresse (A2) et des deuxièmes données utiles (D2) dans un deuxième segment (20) de la zone de données (4.2) du paquet de données (4),
- avec lequel le maître (900) est conçu pour recevoir le paquet de données (4) en provenance du bus (40) et d'affecter les premières données utiles (D1) au premier esclave (100) en se basant sur la première adresse (A1) et d'affecter les deuxièmes données utiles (D2) au deuxième esclave (200) en se basant sur la deuxième adresse (A2) et soumettre les premières données utiles (D1) affectées et les deuxièmes données utiles (D2) affectées à un traitement ultérieur.

2. Système (1) selon la revendication 1,
- avec lequel la zone de données (4.2) du paquet de données (4) présente une taille fixe pendant la transmission sur le bus (40), et
- avec lequel le maître (900) est conçu pour spécifier la taille fixe de la zone de données (4.2).

3. Système (1) selon la revendication 2,
- avec lequel le maître (900) est conçu pour déterminer la grandeur fixe de la zone de données (4.2) du paquet de données (4) en se basant sur un message (LPC, C1, C2, C), le message (LPC, C1, C2, C) étant notamment contenu dans un paquet de données (4') reçu précédemment, et
- avec lequel le premier esclave (100) et/ou le deuxième esclave (200) est conçu pour émettre le message (LPC, C1, C2, C).

4. Système (1) selon l'une des revendications précédentes,
- avec lequel le premier esclave (100) est conçu pour déterminer une taille d'une portion non écrite (ND) dans la zone de données (4.2) du paquet de données (4) et une taille des premières données utiles (D1), et
- avec lequel le premier esclave (100) est conçu pour écrire sa première adresse (A1) et ses premières données utiles (D1) dans le premier segment (10) lorsque la taille des premières données utiles (D1) ne dépasse pas la taille de la portion non écrite (ND).

5. Système (1) selon l'une des revendications 3 et 4,
- avec lequel le premier esclave (100) est conçu pour écrire le message (C1, C2, C) dans l'en-tête (4.1) et/ou dans la zone de données (4.2) du paquet de données (4) lorsque la taille des premières données utiles (D1) dépasse la taille de la portion non écrite (ND).

6. Système (1) selon l'une des revendications précédentes,
- avec lequel le deuxième esclave (20) est conçu pour déterminer une taille d'une portion non écrite (ND) dans la zone de données (4.2) du paquet de données (4) et une taille des deuxièmes données utiles (D2), et
- avec lequel le deuxième esclave (200) est conçu pour écrire sa deuxième adresse (A2) et ses deuxièmes données utiles (D2) dans le deuxième segment (20) lorsque la taille des deuxièmes données utiles (D2) ne dépasse pas la taille de la portion non écrite (ND).

7. Système selon l'une des revendications 3 et 6,
- avec lequel le deuxième esclave (200) est conçu pour écrire le message (C1, C2, C) dans l'en-tête (4.1) ou dans la zone de données (4.2) du paquet de données (4) lorsque la taille des deuxièmes données utiles (D2) dépasse la taille de la portion non écrite (ND).

8. Système (1) selon l'une des revendications précédentes,
- avec lequel le maître (900) est conçu pour générer le paquet de données (4) en se basant sur un événement déterminer et/ou de manière cyclique.

9. Système (1) selon l'une des revendications précédentes,
- avec lequel le maître (900) est conçu pour insérer une priorité de maître (PP) dans le paquet de données (4) .

10. Système (1) selon la revendication 9,
- avec lequel le premier esclave (100) est conçu pour comparer la priorité de maître (PP) contenue dans le paquet de données (4) avec une première priorité de données utiles (P1) des premières données utiles (D1), et
- avec lequel le premier esclave (100) est conçu pour écrire sa première adresse (A1) et ses premières données utiles (D1) dans le premier segment (10) lorsque la priorité de maître (PP) n'est pas supérieure à la première priorité de données utiles (P1).

11. Système (1) selon la revendication 10,
- avec lequel le premier esclave (100) est conçu pour écrire un message de priorité (LPC) dans l'en-tête (4.1) et/ou dans la zone de données (4.2) du paquet de données (4) lorsque la priorité de maître (PP) est supérieure à la première priorité de données utiles (P1).

12. Système (1) selon l'une des revendications précédentes,
- avec lequel le deuxième esclave (200) est conçu pour comparer la priorité de maître (PP) contenue dans le paquet de données (4) avec une deuxième priorité de données utiles (P2) des deuxièmes données utiles (D2), et
- avec lequel le deuxième esclave (200) est conçu pour écrire sa deuxième adresse (A2) et ses deuxièmes données utiles (D2) dans le deuxième segment (20) lorsque la priorité de maître (PP) n'est pas supérieure à la deuxième priorité de données utiles (P2).

13. Système (1) selon la revendication 12,
- avec lequel le deuxième esclave (200) est conçu pour écrire un message de priorité (LPC) dans l'en-tête (4.1) et/ou dans la zone de données (4.2) du paquet de données (4) lorsque la priorité de maître (PP) est supérieure à la deuxième priorité de données utiles (P2).

14. Système (1) selon l'une des revendications 11 ou 13,
- avec lequel le maître (900) est conçu pour interpréter le message de priorité (LPC) et adapter la priorité de maître (PP) pour un paquet de données suivant (4'') en se basant sur l'interprétation du message de priorité (LPC).

15. Système (1) selon l'une des revendications précédentes,
- avec lequel le premier esclave (100) et/ou le deuxième esclave (200) est conçu pour déterminer une portion non écrite (ND) dans la zone de données (4.2) du paquet de données (4) en se basant sur
o une indication de longueur de paquet (LP) dans l'en-tête (4.1) du paquet de données (4) et/ou
o un en-tête de segment (1.1, 2.1) à l'intérieur de la zone de données (4.2) du paquet de données (4), et/ou
o un comptage des portions déjà écrites (10, 20, 0.1) de la zone de données (4.2) du paquet de données (4).

16. Procédé pour faire fonctionner un système de bus (1), comprenant
- génération d'un paquet de données (4) avec un en-tête (4.1) et une zone de données (4.2) par un maître de bus (900) du système de bus (1),
- émission du paquet de données (4) par le maître de bus (900) vers un premier esclave (100) du système de bus (1) et vers un deuxième esclave (200) du système de bus (1),
- le paquet de données (4) étant transmis du maître (900) par le biais du premier esclave (100) et par le biais du deuxième esclave (200) et retour au maître (900),
- écriture d'une première adresse (A1) et de premières données utiles (D1) du premier esclave (100) dans un premier segment (10) de la zone de données (4.2) du paquet de données (4) par le premier esclave (100),
- écriture d'une deuxième adresse (A2) et de deuxièmes données utiles (D2) d'un deuxième esclave (200) dans un deuxième segment (20) de la zone de données (4.2) du paquet de données (4) par le deuxième esclave (200),
- réception du paquet de données (4) comprenant le premier segment (10) et le deuxième segment (20) en provenance du bus (40) par le maître (900),
- affectation des premières données utiles (D1) au premier esclave (100) en se basant sur la première adresse (A1) par le maître (900),
- affectation des deuxièmes données utiles (D2) au deuxième esclave (200) en se basant sur la deuxième adresse (A2) par le maître (900), et
- traitement ultérieur des premières données utiles (D1) affectées et les deuxièmes données utiles (D2) affectées par le maître (900).
